# EUROPÄISCHE PATENTSCHRIFT

(11) **EP 3 118 245 B1**
(45) Veröffentlichungstag und Bekanntmachung des Hinweises auf die Patenterteilung: **04.09.2019**
(21) Anmeldenummer: 15177170.6
(22) Anmeldetag: 16.07.2015
(51) Int. Cl.: C08J 3/22

(54) **VERFAHREN ZUR HERSTELLUNG EINES MASTERBATCHES**
METHOD FOR PRODUCING A MASTER BATCH
PROCEDE DE FABRICATION D'UN MELANGE MAITRE

(43) Veröffentlichungstag der Anmeldung: 18.01.2017
(73) Patentinhaber: DAW SE, 64372 Ober-Ramstadt (DE)
(72) Erfinder: RÖBER, Friedhelm, 04668 Grimma (DE); HÜBNER, Matthias, 04416 Markkleeberg (DE)
(74) Vertreter: Metten, Karl-Heinz

(56) Entgegenhaltungen:
- EP-A1- 2 113 522
- US-A- 5 418 311
- US-A1- 2008 139 735

## Beschreibung

Die vorliegende Erfindung betrifft ein Verfahren zur Herstellung von Masterbatches. Des Weiteren betrifft die Erfindung nach dem erfindungsgemäßen Verfahren erhältliche Masterbatches. Außerdem betrifft die Erfindung die Verwendung der nach dem erfindungsgemäßen Verfahren erhältlichen Masterbatches zur Einfärbung von Polymerwerkstoffen und zur Ausstattung von Polymerwerkstoffen mit Funktionsadditiven.

Masterbatches werden regelmäßig zur anwendungsspezifischen Modifizierung von Kunststoffen eingesetzt. Masterbatches stellen hierbei polymergebundene Additivkonzentrate dar. Der Vorteil solcher Masterbatches ist, dass sie regelmäßig nur in sehr geringen Mengen einem Polymerwerkstoff beigemischt werden müssen, um die gewünschte Einfärbung bzw. Modifizierung herbeizuführen. Diese Mengen liegen regelmäßig im Bereich von zwei bis fünf Prozent. Grundsätzlich können zwei Klassifizierungssysteme für die Einteilung von Masterbatches verwandt werden. Zum einen können Masterbatches eingeteilt werden in Farb-, Additiv- und Kombinationsmasterbatches. Diese Einteilung ist funktionsorientiert. Zum anderen können Masterbatches mit Blick auf das polymere Matrixmaterial, in das diese Masterbatches eingemischt werden, unterteilt werden in universale und polymerspezifische Masterbatches. Aufgrund von Kompatibilitätsproblemen, die auf die teilweise Unverträglichkeit der Polymere zurückzuführen ist, welche einerseits für den Masterbatch und andererseits für das polymere Matrixmaterial verwendet werden, und in Entmischungsphänomenen und Dispergierfehlern resultieren, sind universale Masterbatches für viele Anwendungen noch stets problematisch, obgleich universale Masterbatches unter Lager- und Logistikaspekten durchaus ein erhebliches Rationalisierungspotenzial mit sich bringen würden. Gegenwärtig gibt es für jede Kunststoffklasse eine Vielzahl an speziellen Masterbatchtypen.

Der erfolgreiche Einsatz von Masterbatches hat seine Ursache auch darin, dass feststoffbasierte Additive in Masterbatchpräparationen vollständig oder nahezu vollständig dispergiert vorliegen können. Hiermit geht einher, dass das dispersive Mischen zum Aufbrechen und Zerteilen von Agglomeraten und Aggregaten bei der Herstellung von Kunststoffwerkstoffen kaum erforderlich ist. Demgemäß sind in der Regel beim Einmischen von Masterbatches in polymere Matrixmaterialien keine zusätzlichen Dispergierhilfsmittel zuzugeben. Masterbatches werden im Allgemeinen in Form von Granulaten erhalten. Hierbei lassen sich solche Masterbatches besonders gut handhaben, bei denen die Granulate rieselfähig und staubfrei sind.

Masterbatches werden im Allgemeinen nach einem einstufigen oder einem zweistufigen Verfahren hergestellt. Bei der einstufigen Fertigung werden alle Rohstoffkomponenten vorgelegt und extrudiert. Bei der zweistufigen Variante werden zunächst sogenannte Monokonzentrate hergestellt, die anschließend nochmals gemischt und gegebenenfalls mit Additiven versehen und extrudiert werden. Die Homogenität des Farbtons im Kunststoff hängt davon ab, welches Fließverhalten in der Schmelze erreicht wird bzw. wie gut sich der Masterbatch in der Matrix verteilt. Vielfach gelingt es nicht oder nur in unzureichendem Umfang, Pigmente unter Erhalt einer homogenen Einfärbung in einen Masterbatch einzuarbeiten. Beispielsweise sind durch trockene Calcinierung hergestellte Pigmente regelmäßig nur unter hohem Energieeintrag und zudem meist nur unvollständig in einem Masterbatches verteilbar. Man spricht hier auch von sogenannten dispergierharten Pigmenten.

In der EP 2 113 522 A1 wird ein Verfahren zur Herstellung eines Farbmasterbatches beschrieben, umfassend die folgenden Schritte:
a) Mischen mindestens einer mit einer Amino-, Hydroxy- oder Carboxy-Gruppe terminierten Siloxanstruktur der allgemeinen Formel I (Komponente A): 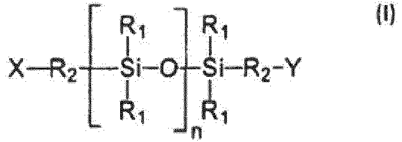 mit
   R1 unabhängig voneinander ein einwertiger gegebenenfalls durch Fluor oder Chlor substituierter Kohlenwasserstoffrest mit 1 bis 20 Kohlenstoffatomen,
   R2 unabhängig voneinander ein Alkylenrest mit 1 bis 20 Kohlenstoffatomen, in dem einander nicht benachbarte Methyleneinheiten durch Gruppen -O- ersetzt sein können oder einen Arylenrest mit 6 bis 22 Kohlenstoffatomen,
   X und Y unabhängig voneinander eine Hydroxy-, Carboxy- oder Amino-Gruppe -NR'- mit R' = Wasserstoff, Alkylrest mit 1 bis 10 Kohlenstoffatomen oder Arylrest mit 6 bis 22 Kohlenstoffatomen und
   n eine Zahl von 1 bis 10000,
   mit mindestens einer bifunktionellen Verbindung (Komponente B), die zwei, mit X und Y durch Polyaddition oder Polykondensation verknüpfbare Gruppen aufweist,
b) Polymerbildung der Mischung der Komponenten A und B sowie
c) Aufschmelzen des Polymerisats im Extruder oder diskontinuierlichen Innenmischer mit anschließender Granulation, wobei vor Abschluss der Polymerbildung mindestens ein Farbmittel zugesetzt wird. Mit diesen Verfahren sollen Farbmasterbatches in hoher Effizienz bereitgestellt werden können, die sich durch eine hohe Kompatibilität gegenüber zugesetzten Farbmitteln und deren eingesetzten Mengen auszeichnen.

Die US 5,418,311 stellt ab auf ein Verfahren zur Herstellung von Polymeren, welche Polyurethan- und/oder Polyharnstoff-Gruppierungen aufweisen und feinteilige Füllstoffe enthalten, durch Umsetzung von Verbindungen, welche mindestens zwei Hydroxyl- und/oder Aminogruppen aufweisen, mit mindestens difunktionellen Isocyanaten, gegebenenfalls in Gegenwart von Katalysatoren, und Vermischen mit geeigneten Füllstoffen, wobei man a) die Hydroxyl- und/oder Aminogruppen aufweisenden Verbindungen und die Isocyanate bei einer Temperatur, bei der die Reaktionskomponenten flüssig vorliegen, jeweils getrennt mit den feinteiligen Feststoffen in solchen Mengen innig vermischt, dass rieselfähige Pulver erhalten werden, b) die erhaltenen Pulver in den stöchiometrisch erforderlichen Mengen vermischt und c) das Pulvergemisch der Einwirkung von Scherkräften bei Raumtemperatur oder erhöhter Temperatur unterwirft. Mit dem Verfahren gemäß der US 5,418,311 sollen Polyadditionsprodukte lösungsmittelfrei hergestellt werden können. Außerdem sollen sich häufig spontan reagierende Ausgangsprodukte in kontrollierter Weise unter Ausbildung möglichst homogener Verfahrensprodukte miteinander umsetzen lassen.

Aus der US 2008/0139735 A1 geht eine feste Pigmentzubereitung hervor, enthaltend als wesentliche Bestandteile (A) 60 bis 95 Gew.-% mindestens eines Pigments, (B) 2,5 bis 35 Gew.-% mindestens eines wasserlöslichen oberflächenaktiven Additivs auf Basis von Polyurethanen und (C) 2,5 bis 35 Gew.-% mindestens eines nichtionischen wasserlöslichen oberflächenaktiven Additivs (C1) auf der Basis von Polyethern und/oder eines von den Additiven (B) verschiedenen anionischen wasserlöslichen oberflächenaktiven Additivs auf der Basis von Polymerisaten ethylenisch ungesättigter Carbonsäuren (C2). Diese Pigmentzubereitung soll sich durch eine hohe Farbstärke und eine besonders leichte Dispergierbarkeit in insbesondere flüssigen, vorzugsweise wässrigen Anwendungsmedien auszeichnen.

Es ist wünschenswert, Masterbatche zu finden, die als universale Masterbatche für eine breite Palette an polymeren Matrixmaterialien eingesetzt werden können. Daher lag der vorliegenden Erfindung die Aufgabe zu Grunde, ein Verfahren zur Herstellung von Masterbatches zu finden, mit dem ein wirtschaftlicher und zuverlässiger Zugang zu universalen Masterbatches ermöglicht wird. Ferner lag der vorliegenden Erfindung die Aufgabe zu Grunde, solche Masterbatche zur Verfügung zu stellen, die weder bei der Verarbeitung im Extruder noch bei der Einarbeitung in polymere Matrixmaterialien und auch nicht bei der Weiterverarbeitung der schmelzeflüssigen Polymerwerkstoffe in beispielsweise Spritzgießmaschinen zu Ablagerungen führen (dieses Phänomen ist auch unter dem sogenannten "plate-out"-Effekt bekannt) bzw. die den plate-out Effekt zurückzudrängen in der Lage sind. Außerdem lag der vorliegenden Erfindung die Aufgabe zu Grunde, solche Masterbatches zur Verfügung zu stellen, die nach der Einarbeitung in polymere Matrixmaterialien nicht zur Schlierenbildung bei den daraus erhaltenen Polymerwerkstoffen führen. Ferner lag der Erfindung die Aufgabe zugrunde, Pigmente, Additive und/oder Füllstoffe verweilzeitunabhängig und/oder ohne thermische Belastung in den Masterbatch einarbeiten zu können. Schließlich lag der Erfindung die Aufgabe zugrunde, Masterbatche verfügbar zu machen, mit denen sich auch schwierig zu dispergierende Pigmente, Additive und/oder Füllstoffe in eine, vorzugsweise beliebige Kunststoffmatrix homogen einarbeiten lassen, und zwar bevorzugt ohne auf den Einsatz von Dispergierhilfsmitteln angewiesen zu sein.

Demgemäß wurde ein Verfahren zur Herstellung eines Masterbatches gefunden, umfassend die folgenden Schritte:
a1) Zurverfügungstellung mindestens einer mit mindestens einer, insbesondere mit mindestens oder genau zwei, Amino-, Hydroxy-, Carboxy-, Carboxylat-, Carbonsäureester- oder Carbonsäureanhydrid-Gruppen terminierten Siloxanverbindung der allgemeinen Formel (Komponente A1): 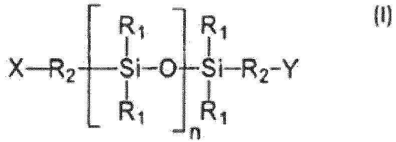 mit
   - R1: unabhängig voneinander ein einwertiger, gegebenenfalls durch Fluor oder Chlor substituierter, Kohlenwasserstoffrest mit 1 bis 20 Kohlenstoffatomen,
   - R2: unabhängig voneinander ein Alkylenrest mit 1 bis 20 Kohlenstoffatomen, in dem einander nicht benachbarte Methyleneinheiten durch Gruppen -O- ersetzt sein können, oder ein Arylenrest mit 6 bis 22 Kohlenstoffatomen,
   - X, Y: unabhängig voneinander eine Hydroxy-, Carboxy-, Carboxylat-, Carbonsäureester-, Carbonsäureanhydrid- oder Amino-Gruppe NHR' mit R' = Wasserstoff, Alkylrest mit 1 bis 10 Kohlenstoffatomen, insbesondere Methyl, Ethyl oder i- oder n-Propyl, vorzugsweise n-Propyl, oder Arylrest mit 6 bis 22 Kohlenstoffatomen, insbesondere eine NH₂-Gruppe, vorzugsweise gemeinsam, und
   - n: eine Zahl von 75 bis 215, insbesondere von 80 bis 200;
a2) Zurverfügungstellung mindestens einer mindestens bifunktionellen, insbesondere bifunktionellen, Verbindung (Komponente A2) die zwei oder mehr, insbesondere zwei, mit X und Y, insbesondere durch Polyaddition oder Polykondensation, verknüpfbare Gruppen aufweist;
a3) Zurverfügungstellung mindestens eines Farbmittels (Komponente A3) und/oder
a4) Zurverfügungstellung mindestens eines Funktionsadditivs (Komponente A4);
a5) Zurverfügungstellung mindestens einer mit mindestens einer, insbesondere mit mindestens zwei, Amino-, Hydroxy-, Carboxy-, Carboxylat-, Carbonsäureester- oder Carbonsäureanhydrid-Gruppen terminierten Siloxanverbindung der allgemeinen Formel (Komponente A5): 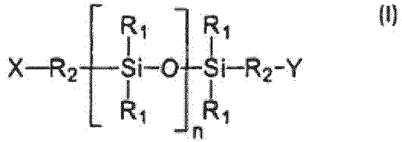 mit
   - R1: unabhängig voneinander ein einwertiger, gegebenenfalls durch Fluor oder Chlor substituierter, Kohlenwasserstoffrest mit 1 bis 20 Kohlenstoffatomen,
   - R2: unabhängig voneinander ein Alkylenrest mit 1 bis 20 Kohlenstoffatomen, in dem einander nicht benachbarte Methyleneinheiten durch Gruppen -O- ersetzt sein können, oder ein Arylenrest mit 6 bis 22 Kohlenstoffatomen,
   - X, Y: unabhängig voneinander eine Hydroxy-, Carboxy-, Carboxylat-, Carbonsäureester-, Carbonsäureanhydrid- oder Amino-Gruppe NHR' mit R' = Wasser stoff, Alkylrest mit 1 bis 10 Kohlenstoffatomen, insbesondere Methyl, Ethyl oder i- oder n-Propyl, vorzugsweise n-Propyl, oder Arylrest mit 6 bis 22 Kohlenstoffatomen, insbesondere eine NH₂-Gruppe, vorzugsweise gemeinsam, und
   - n: eine Zahl von 20 bis 74, insbesondere im Bereich von 25 bis 70, und
b) Mischen der Komponenten gemäß a1), a2), a3) und a5) oder gemäß a1), a2), a4) und a5) oder gemäß a1), a2), a3), a4) und a5);
c) Polymerbildung der Mischung gemäß b) und
d) Aufschmelzen und/oder Schmelzeflüssighalten des in Schritt c) gebildeten Polymerisats, insbesondere im Extruder oder im diskontinuierlichen Innenmischer, und
e) Überführen des Polymerisats gemäß Schritt d) in einen festen Aggregatzustand, insbesondere in Granulat- oder Pulverform.

In dem erfindungsgemäßen Verfahren wird für die in Schritt a1) zur Verfügung gestellte Siloxanverbindung A1 bevorzugt auf solche zurückgegriffen, bei der n eine Zahl im Bereich von 100 bis 180, insbesondere im Bereich von 110 bis 160, darstellt. Für die in Schritt a5) zur Verfügung gestellten Siloxanverbindungen A5 stellt n vorzugsweise eine Zahl im Bereich von 30 bis 60, insbesondere im Bereich von 35 bis 50, dar.

Bei der Angabe der Wiederholungseinheiten "n" handelt es sich in einer zweckmäßigen Ausgestaltung um die durchschnittliche Anzahl an Wiederholungseinheiten in den Siloxanverbindungen A1) bzw. A5), wie sie bei der Herstellung der erfindungsgemäßen Masterbatche eingesetzt werden. Bevorzugt handelt es sich bei der Angabe der Wiederholungseinheiten "n" um eine Absolutangabe.

Besonders zweckmäßig ist es, wenn die in Schritt a1) und/oder a5) zur Verfügung gestellten Siloxanverbindungen bei Raumtemperatur (20°C) in flüssiger Form vorliegen. Durch Variation der Komponenten A1) und A5) können die Trägerpolymere des Masterbatches optimal an rheologische Gegebenheiten der zu modifizierenden Polymerwerkstoffe angepasst werden, ohne dass sich die Einarbeitbarkeit verändert.

Für der gemäß a1) zur Verfügung gestellte Siloxanverbindung A1 und/oder für die gemäß a5) zur Verfügung gestellte Siloxanverbindung A5 sind solche besonders geeignet, bei denen
- R1: unabhängig voneinander Methyl, Ethyl, n-Propyl, i-Propyl, n-Butyl, i-Butyl, n-Pentyl- oder i-Pentyl, insbesondere Methyl, und/oder
- R2: unabhängig voneinander einen Methylen-, Ethylen-, Propylen-, Butylen-, Pentylen oder Hexylenrest, insbesondere einen Propylenrest, vorzugsweise n-Propylenrest, darstellt.

In einer besonders zweckmäßigen Ausgestaltung des erfindungsgemäßen Verfahrens ist vorgesehen, dass die in Schritt a1) zur Verfügung gestellte Siloxanverbindung A1) eine solche ist, insbesondere ein α,ω-Aminopropyl-terminiertes Polydimethylsiloxan, mit einer mittleren Molmasse im Bereich von 6.000 bis 14.000 g/mol, insbesondere im Bereich von 9.000 bis 13.000 g/mol. Ferner ergeben sich auch dadurch besonders zufriedenstellende Resultate, dass man für die in Schritt a5) zur Verfügung gestellte Verbindung auf eine Siloxanverbindung (A5), insbesondere ein α,ω-Aminopropyl-terminiertes Polydimethylsiloxan, mit einer mittleren Molmasse im Bereich von 2.000 bis 5.500 g/mol, insbesondere im Bereich von 2.500 bis 4.000 g/mol, zurückgreift.

Für das erfindungsgemäße Verfahren kommen als besonders geeignete bifunktionelle Monomere (Komponente A2) gemäß a2)) insbesondere solche in Betracht, ausgewählt aus der Gruppe bestehend aus Diisocyanaten, Diaminen, Diolen, Dicarbonsäuren, Diformaldehydterminierten Verbindungen und Mischungen hiervon.

Als besonders bevorzugt haben sich für die bifunktionellen Monomere (Komponente A2) gemäß a2) Diisocyanate der allgemeinen Formel (II) erwiesen:

O=C=N-R₃-N=C=O (II)

wobei R3 einen gegebenenfalls durch Fluor oder Chlor substituierten Alkylenrest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen darstellt.

Hierbei sind solche bifunktionellen Verbindungen nach a2) besonders geeignet, die ausgewählt sind aus der Gruppe bestehend aus aliphatischen Diisocyanaten, insbesondere 1,6-Diisocyanat-hexan, 3-Isocyanatomethyl-3,5,5-trimethylcyclohexylisocyanat und/oder 1-Isocyanato-4-[(4-isocyanatocyclohexyl)-methyl]cyclohexan, und aromatischen Diisocyanaten, insbesondere 2,4- Toluylen-diisocyanat, 2,6-Toluylen-diisocyanat, 4,4'-2,2'-Diphenylmethandiisocyanat, 2,4'-2,2'-Diphenylmethandiisocyanat, 2,2'-Diphenylmethandiisocyanat, 4-Methyl-m-phenylendiisocyanat, 1,3-bis-(1-isocyanato-1-methylethyl)-benzol, Polyphenyl-polymethylen-polyisocyanaten und/oder urethanmodifizierten 4,4'-Diphenymethan-diisocyanaten, oder deren Mischungen. Hierbei sind aliphatische Diisocyanate bevorzugt.

Das erfindungsgemäße Verfahren liefert insbesondere auch dadurch zuverlässig gute Resultate, dass die Verbindungen der allgemeinen Formel (I) (Komponente A1) und die mindestens bifunktionellen Verbindungen, insbesondere die bifunktionellen Verbindungen, (Komponente A2), in äquimolaren Mengenverhältnissen eingesetzt werden.

Bei dem erfindungsgemäßen Verfahren ist es von Vorteil, wenn die Farbmittel und/oder Funktionsadditive (Komponenten a3) bzw. a4)) vor Beginn der Polymerbildung gemäß Schritt c) mit der Siloxanverbindung gemäß Komponente A1) und gegebenenfalls A5) und/oder der mindestens bifunktionellen Verbindung gemäß Komponente A2), insbesondere mit der Siloxanverbindung gemäß Komponente A1) und der mindestens bifunktionellen Verbindung gemäß Komponente A2) oder mit der Siloxanverbindung gemäß Komponenten A1) und A5) und der mindestens bifunktionellen Verbindung gemäß Komponente A2) vermischt werden. Alternativ ist es möglich, einen Teil der Farbmittel, insbesondere Pigmente, und/oder Funktionsadditive auch während der Polymerbildung gemäß Schritt c) zuzugeben.

Die Farbmittel und/oder die Funktionsadditive werden vorzugsweise in die Siloxanverbindungen gemäß Komponente A1 gegeben. Hierbei sind flüssige Siloxanverbindungen gemäß Komponente A1 besonders geeignet. Die homogene Dispergierung von Farbmitteln und/oder Funktionsadditiven in die insbesondere flüssigen Siloxanverbindungen stellt für den Fachmann regelmäßig kein Problem dar. Die Polysiloxanverbindungen gemäß Komponente A1 werden dabei vorzugsweise mit Molmassen von größer oder gleich 10.000 g/mol eingesetzt. Besonders geeignete Polysiloxanverbindungen liegen somit als Oligomere vor.

Indem man die Farbmittel und/oder Funktionsadditive vor oder teilweise während des Ausreagierens der Komponenten A1 und A2 zum fertigen Farb-Masterbatch zugibt, erhält man das Produkt in nur einem Extrusionsschritt und zudem in sehr hoher Einarbeitungsqualität bei gleichzeitig sehr hoher Produktqualität bzw. -unversehrtheit. Beispielsweise wird das Trägermaterial des Masterbatches nur ein einziges Mal vor dem Endeinsatz thermisch belastet. Dadurch verringert sich der Einfluss thermischer Abbaureaktionen auf die Matrix. Es ist ein großer Vorteil der vorliegenden Erfindung, dass sich Farbmittel, insbesondere Pigmente, Füllstoffe und/oder Funktionsadditive verweilzeitunabhängig und zudem ohne thermische Belastung dispergieren lassen. Dies trifft selbst auf sogenannte dispergierharte Systeme, d.h. schwer zu dispergierende Systeme wie dispergierharte Pigmente zu. Auch ist von Vorteil, dass auf die Verwendung von Dispergierhilfsmitteln, z.B. auf Wachse, vollständig verzichtet werden kann, ohne dass das gewünschte Ergebnis in Mitleidenschaft gezogen wird. Hierbei kann ausgenutzt werden, dass sich Pigmente und/oder Funktionsadditive zunächst ohne zeitliche Limitierung und ohne dass eine thermische Beanspruchung, die sonst stets zwingend erforderlich ist, in die flüssige bzw. pastöse Siloxanverbindung gemäß Komponente A1) bzw. A5) einarbeiten lassen. Beispielsweise gelingt dies mittels eines Labordissolvers, zum Beispiel bei ca. 1000 U/min für 10 min. Wird eine weitergehende Dispergierung gewünscht, können alternativ oder insbesondere zusätzlich ein oder mehrere Reibgänge auf einem Labordreiwalzreibstuhl oder in einer Perlreibmühle vorgenommen werden. Auf diese Weise gelangt man ohne weiteres zu Pigmenten und Funktionsadditiven mit einer Aufschlussgröße kleiner 10 µm. Der Dispergiergrad kann hierbei zum Beispiel mittels eines Grindometers bestimmt werden.

Geeignete Farbmittel umfassen Pigmente, Farbstoffe oder Mischungen hiervon. Als Pigmente kommen sowohl anorganische als auch organische Pigmente in Frage. Geeignete anorganische Pigmente können zum Beispiel ausgewählt werden aus der Gruppe bestehend aus Oxiden, z.B. Eisenoxid (braun, rot, schwarz), Chromoxid (grün) oder Titandioxid (weiß), Kohlenstoff, z.B. Ruß-schwarz, Chromaten, z.B. Bleichromat-gelb, Molybdatorange, Komplexen anorganischer Buntpigmente, z.B. Chromtitangelb, Chromeisenbraun, Kobaltblau, Nickeltitangelb, Zinkeisenbraun oder Wismutvanadatgelb, und Sulfiden, z.B. Cadmiumsulfid (gelb, orange, rot), Cersulfid (gelb, orange, rot), Ultramarin (violett, blau) oder Zinksulfid (weiß), oder deren beliebige Mischungen. Geeignete organische Pigmente können ausgewählt werden aus der Gruppe bestehend aus Azopigmenten, z.B. verlackte Azopigmente (gelb, rot), Disazopigmenten (gelb, orange, rot), Diazokondensationspigmenten (gelb, rot), Benzimidazolpigmenten (gelb, orange), Metallkomplexpigmenten (gelb), Isoindolinpigmenten (gelb), Isoindolinonpigmenten (gelb), und polyzyklischen Pigmenten, z.B. Chinacridon (violett, blau), Chinophthalon (gelb), Diketo-Pyrrolo-Pyrrol (orange, rot, violett), Disoxazinpigmenten (violett), Indanthron (blau), Perylen (rot, violet) oder Phthalocyanin (blau, grün), oder deren beliebige Mischungen.

Bei Farbstoffen handelt es sich im Unterschied zu Pigmenten um Farbmittel, die in dem einzufärbenden Matrixmaterial löslich sind. Geeignete Farbstoffe können zum Beispiel ausgewählt werden aus der Gruppe bestehend aus Anthrachinon, Chinophthalon, Pyrazolon, Perinon, Monoazofarbstoffen und fluoreszierenden Farbstoffen, z.B. Perylen, Naphthalimid, Cuminderivate, Thioindigo oder Thioxanthen-Benzanthron, oder deren beliebige Mischungen.

Werden bei dem erfindungsgemäßen Verfahren Farbmittel eingesetzt, kommen hierfür vorzugsweise Pigmente in Betracht.

Exemplarisch können geeignete Funktionsadditive ausgewählt werden aus der Gruppe bestehend aus Nukleierungsmitteln, Nanofüllstoffen, Schichtsilikaten, insbesondere delaminierten Schichtsilikaten, Stabilisatoren, insbesondere Thermostabilisatoren und/oder Lichtstabilisatoren, Antistatika, Flammschutzmittel, Haftvermittlern, Antiblockmitteln, Verarbeitungshilfsmitteln, Treibmitteln und antimikrobiellen Mitteln, insbesondere antibakteriellen Mitteln, oder beliebigen Mischungen hiervon.

Mit dem erfindungsgemäßen Verfahren gelingt es, Farbmittel, insbesondere Pigmente, und/oder Funktionsadditive über einen sehr großen Konzentrationsbereich in die Masterbatche einzuarbeiten. So ist es möglich, in bzw. vermittels Schritt b) 1 bis 90 Gew.-%, vorzugsweise 5 bis 85 Gew.-% und besonders bevorzugt 10 bis 80 Gew.-%, an Farbmittel, insbesondere an Pigmenten, jeweils bezogen auf das Gewicht des in Schritt e) erhaltenen Polymers, in die Masterbatche einzutragen. Ferner wird durch das erfindungsgemäße Verfahren ermöglicht, dass man 1 bis 80 Gew.-%, bevorzugt 2 bis 70 Gew.-% und besonders bevorzugt 5 bis 50 Gew.-%, bezogen auf das Gewicht des in Schritt e) erhaltenen Polymers, an Funktionsadditiv in die Masterbatche integriert.

Bei dem erfindungsgemäßen Verfahren können auch Kettenextender zugesetzt werden. Nützliche Kettenextender beinhalten zwei, drei oder mehr mit Isocyanaten reaktive, funktionelle Gruppen, wobei bifunktionelle Kettenextender bevorzugt sind. Geeignete mit Isocyanaten reaktive Kettenextender verfügen im Allgemeinen über ein niedriges Molekulargewicht. Exemplarisch seien Polyole, beispielsweise Diole, und sekundäre Polyamine, beispielsweise Diamine genannt.

In einer Weiterentwicklung des erfindungsgemäßen Verfahrens ist vorgesehen, dass nach dem Mischen der Komponenten gemäß Schritt b), insbesondere unmittelbar nach Beendigung der Zugabe der Komponenten, mindestens ein Kettenextender (Komponente B)) mit der allgemeinen Formel III:

H-V-R₄-W-H (III)

mit
- R4: ein gegebenenfalls durch Fluor, Chlor, C1-C6-Alkyl- oder C1-C6-Alkylester substi tuierter Alkylenrest mit 1 bis 700 C-Atomen, in dem einander nicht benachbarte Methyleneinheiten durch die Gruppen -O-, - COO-, -OCO- oder -OCOO- ersetzt sein können, und
- V, W: unabhängig voneinander -O- oder -NR", wobei R" Wasserstoff, ein Alkylrest mit 1 bis 10 C-Atomen, insbesondere Methyl, Ethyl oder i- oder n-Propyl, vorzugsweise n-Propyl, oder ein Arylrest mit 6 bis 22 C-Atomen ist,
zugesetzt wird.

Als Kettenextender kommen bevorzugt Diole und Diamine in Betracht. Besonders geeignete Kettenextender können dabei ausgewählt werden aus der Gruppe bestehend aus 4,4-Methylenbis-(2-chloranilin), 2,3-Bibrom-2-buten-1,4-diol, Ethylenglykol, 1,2- und 1,3-Propandiol, 1,3- und 1,4- und 2,3-Butandiol, Diethylenglykol, Dipropylenglykol, Tripropylenglykol, 1,6-Hexandiol, 1,4-Cyclohexandimethanol, 3-Methyl-1,5-pentandiol, Neopentylglykol, 4,4'-Methylen-bis(2-chloranilin), 1,3-Di-(4-piperidyl)propan (DIPIP), N-(2-Aminoethyl)-propylmethyldimethoxysilan (DAS), Piperazin, N,N'-Dialkyl(methylen)dianilin, N,N'-Dialkyl(1,4-diamino)benzol, N,N'-Bis(diisopropylmethyl)diaminoethan und N,N'-Bis(t-butyl)diaminocyclohexan, Ethylendiamin, Asparaginsäureesterpolyamine, 2-Methyl-1,5-pentandiamin und 1,2-Propandiamin oder deren beliebige Mischungen.

Die Polymerbildung in Schritt c) wird bevorzugt bei Temperaturen von 20 °C oder darüber durchgeführt. Grundsätzlich kann aber auch bei niedrigeren Temperaturen gearbeitet werden.

Das erfindungsgemäße Verfahren kann in einer zweckmäßigen Ausgestaltung im Wesentlichen unter Ausschluss von Feuchtigkeit und/oder unter Schutzgas, insbesondere Stickstoff oder Argon, durchgeführt werden.

Eine solche Verfahrensführung führt regelmäßig zu vorteilhaften Resultaten, bei der der Schritt c) und der Schritt d) sowie gegebenenfalls auch der Schritt b) in einem Extruder umfassend mindestens ein förderndes Element stattfinden.

Zur Förderung eines komplikationslosen Verfahrensverlaufs kann man den Extruder in Schritt c) und gegebenenfalls auch in Schritt d) entgasen, insbesondere vakuumentgasen.

In einer besonders vorteilhaften Verfahrensführung des erfindungsgemäßen Verfahrens ist vorgesehen, dass man die Komponente gemäß a1) und a3) oder a1) und a4) oder a1), a3) und a4) oder a1), a5) und a3) oder a1), a5) und a4) oder a1), a5), a3) und a4), insbesondere mittels Einmischens oder Extrusion, vermischt und die erhaltene Mischung, insbesondere in flüssiger oder pastöser Form, mit der Komponente a2), insbesondere mittels Einmischens oder Extrusion, vermischt, insbesondere die Komponente a2) zu der erhaltenen Mischung hinzufügt.

Die Komponente A2, das mindestens bifunktionelle Monomere, wird bevorzugt im Bereich mindestens eines fördernden Elements, insbesondere mittels eines Sprühkopfs, besonders bevorzugt eines Kapillarsprühkopfs, zur Komponente A1) bzw. zu den Komponenten A1) und A5) und gegebenenfalls jeweils den weiteren Komponenten A3) und/oder A4) zugemischt.

Des Weiteren kann in einer bevorzugten Ausgestaltung vorgesehen sein, dass man die Komponente gemäß a3) oder a4) oder a3) und a4) mit einem ersten Anteil der Komponente gemäß a1) vermischt und dass man die erhaltene Mischung, insbesondere in flüssiger oder pastöser Form, mit dem verbleibenden Anteil der Komponente gemäß a1), insbesondere mittels Einmischens oder Extrusion, vermischt.

Um einen regelmäßig stets einwandfreien Verfahrensverlauf sicherzustellen, kann man in einer bevorzugten Ausführungsform des erfindungsgemäßen Verfahrens vorsehen, dass der Extruder im Übergang vom Getriebe zum Schneckenzylinder, insbesondere mittels einer Stopfbuchspackung, abgedichtet wird.

Gemäß einer weiteren bevorzugten Ausgestaltung des erfindungsgemäßen Verfahrens ist vorgesehen, dass dieses ferner umfasst: die a6) Zurverfügungstellung von mindestens einem Dispergierhilfsmittel ausgewählt aus der Gruppe bestehend aus Wachse, insbesondere PE-Wachse, Ethylenvinylacetat-Copolymer-Wachse und/oder Montanwachse, Metallseifen, insbesondere Mg-, K- und/oder Zn-Stearate, organischen Fettsäuren und organischen Fettsäureestern oder deren beliebige Mischungen, wobei in Schritt b) die Komponenten gemäß a1), a2), a3) und a6) oder gemäß a1), a2), a4) und a6) oder gemäß a1), a2), a3), a4) und a6) oder gemäß a1), a2) a3), a5) und a6) oder gemäß a1), a2), a4), a5) und a6) oder gemäß a1), a2), a3), a4), a5) und a6) gemischt werden.

In dem Schritt c) der Polymerbildung werden aus den Siloxanverbindungen (Komponente A1 und gegebenenfalls Komponente A5)) und den mindestens bifunktionell Monomeren (Komponente A2) Copolymere gebildet. Bei Verwendung von Kettenextendern, wie vorangehend beschrieben, werden diese Komponenten ebenfalls in die Copolymerekette mit eingebaut. Für die Copolymerbildung bedient man sich vorzugsweise der Polyadditions- oder der Polykondensationsreaktion unter Abspaltung von z.B. Wasser. Für die Bildung dieser Copolymere sind im Allgemeinen zwei bifunktionelle Komponenten erforderlich. Zum einen eine bifunktionelle Komponente A1, welche eine organische Silicium verbindung enthält, und zum anderen eine bifunktionelle Komponente A2. Die funktionellen Gruppen der Komponente A2 sind dabei regelmäßig derart beschaffen sein, dass sie in der Lage sind, mit den funktionellen Gruppen der Komponente A1 reagieren zu können. Werden Komponente A1 und Komponente A2 in stöchiometrischen Verhältnissen, d.h. im molaren Verhältnis 1:1 eingesetzt, bilden sich regelmäßig Copolymere, in denen Komponente A1 und Komponente A2 sich abwechseln.

Wird in das Copolymer zusätzlich ein Kettenextender eingebaut, erfolgt die Reaktion zum Makromolekül in der Regel in zwei Stufen. Allerdings sind auch einstufige Verfahrensverläufe möglich. Hierbei ist es von Vorteil, zunächst wieder die Komponente A1 und die Komponente A2 zur Reaktion zu bringen, wobei das molare Verhältnis von A1 und A2 so gewählt wird, dass nur relativ kurze Copolymerketten mit der exakten Struktur BAB entstehen. Das molare Verhältnis von A1 zu A2 beträgt hierbei bevorzugt 1:2. In einem zweiten, zeitlich nachgelagerten Reaktionsschritt erfolgt dann die Zugabe des Kettenextenders. Der vorangehend wiedergegebenen Struktur des Kettenextenders entnimmt man, dass diese bevorzugt ebenfalls bifunktionell ist und das die funktionellen Gruppen des Kettenextenders in der Lage sind, mit den funktionellen Gruppen der Komponente A2 zu reagieren. Letztendlich entstehen bei dieser Reaktion Copolymere mit der Abfolge ...BABCBABC....

Es hat sich gezeigt, dass in der in Schritt c) erhaltenen Polymerverbindung die darin eingebaute Siloxaneinheit (A1) eher unpolar ist, während die Komponente A2 wie auch gegebenenfalls der Kettenextender zur polaren Natur der Polymerverbindung beitragen. Durch die Variation von unpolaren und polaren Comonomereinheiten können die in Schritt c) erhaltenen Copolymere an verschiedenste Polymerwerkstoffe bezüglich der Verträglichkeit angepasst werden. Demgemäß ist es ein Vorteil der vorliegenden Erfindung, dass mit den nach dem erfindungsgemäßen Verfahren erhältlichen Masterbatches unterschiedlichste Polymerwerkstoffe modifiziert werden können, ohne dass Kompatibilitätsprobleme zu befürchten sind. Mit dem erfindungsgemäßen Verfahren gelingt somit ein Zugang zu sogenannten Universal-Masterbatches. Des Weiteren kann man über die in der Regel unpolare Natur der in Schritt c) in das Polymer angebauten Siloxaneinheiten (A1) die Oberflächen von mit dem nach dem erfindungsgemäßen Verfahren erhaltenen Masterbatches ausgestatteten Polymerwerkstoffe unpolar, d.h. hydrophob ausführen. Deren Oberflächen können auf diese Weise mehr oder weniger stark wasserabweisend ausgerüstet werden. Dieses ist selbst mit polaren polymeren Matrixmaterialien wie Polyestern, z.B. PET, oder Polyamiden möglich.

Das polymere Material der nach dem erfindungsgemäßen Verfahren erhältlichen Masterbatche verfügt nicht nur über die vorteilhafte Eigenschaft, Farbmittel, insbesondere Pigmente, und/oder Funktionsadditive über einen sehr breiten Konzentrationsbereich in homogener Verteilung aufzunehmen, und zwar ohne dass es zur Bildung von Agglomeraten oder Aggregaten kommt, sondern wirkt gleichfalls als Prozesshilfsmittel und/ oder Zähigkeitsmodifikator. So ist es zum Beispiel möglich, durch Verwendung der nach dem erfindungsgemäßen Verfahren erhältlichen Masterbatche, selbst bei sonst konstanten Prozessparametern, bei der Fertigung nach dem Spritzgießverfahren die Zykluszeiten signifikant zu senken. Überdies kann bei Verwendung der nach dem erfindungsgemäßen Verfahren erhältlichen Masterbatches im Extrusionsverfahren der Durchsatz bei sonst konstanten Bedingungen signifikant gesteigert werden. Mit diesen erfindungsgemäßen Masterbatches gelingt somit regelmäßig eine wirtschaftlichere Verfahrensführung bei der Weiterverarbeitung.

Die mit den nach dem erfindungsgemäßen Verfahren erhaltenen Masterbatches ausgestatteten Polymerwerkstoffe zeichnen sich häufig auch durch eine größere Elastizität selbst bei niedrigen Temperaturen aus.

Besonders gute Ausbeuten lassen sich auch erzielen, wenn bei dem erfindungsgemäßen Verfahren zur Herstellung von Masterbatches ein Katalysator aus der Gruppe enthaltend Dialkylzinnverbindungen, Dibutylzinndilaurat, Dibutylzinndiacetat, tertiäre Amine, N,N-Dimethylcyclohexanamin, 2-Dimethylaminoethanol, 4-Dimethylaminopyridin und/oder Mischungen hieraus zugesetzt wird.

Die der Erfindung zugrunde liegende Aufgabe wird des Weiteren gelöst durch einen nach dem erfindungsgemäßen Verfahren erhaltenen oder erhältlichen Masterbatch. Derartige Masterbatche umfassen Farb-Masterbatche, Funktionsadditiv-Masterbatche sowie Kombinationsmasterbatche enthaltend mindestens ein Farbmittel, insbesondere Pigmente, und mindestens ein Funktionsadditiv. Farb-Masterbatche enthalten mindestens ein Farbmittel, insbesondere mindestens ein Pigment, während Funktionsadditiv-Masterbatche mindestens ein Funktionsadditiv enthalten. Erfindungsgemäße Masterbatche können in Granulat- oder Pulverform vorliegen, wobei die Granulatform bevorzugt ist.

Die nach dem erfindungsgemäßen Verfahren erhältlichen Masterbatche enthalten bevorzugt mindestens ein Copolymer bzw. Blockcopolymer der allgemeinen Formel IV

B-[R₂-(O-Si(R₁)₂)ₙ-O-Si(R₁)₂-R₂-NH-CO-NH-R₃-NH-CO-NH]ₐ-B' (IV)

mit
- R1: unabhängig voneinander ein einwertiger gegebenenfalls durch Fluor oder Chlor substituierter Kohlenwasserstoffrest mit 1 bis 20 Kohlenstoffatomen, insbesondere Methyl,
- R2: unabhängig voneinander ein Alkylenrest mit 1 bis 20 Kohlenstoffatomen, in dem einander nicht benachbarte Methyleneinheiten durch Gruppen -O- ersetzt sein können, insbesondere ein Methylen-, Ethylen- oder Propylenrest, oder ein Arylenrest mit 6 bis 22 Kohlenstoffatomen,
- R3: ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können, insbesondere ein Methylen-, Ethylen- oder Propylenrest, oder ein Arylenrest mit 6 bis 22 Kohlenstoffatomen,
- B, B': unabhängig voneinander eine reaktive oder nicht reaktive Endgruppe, welche kovalent an das Polymer gebunden ist, insbesondere eine Hydroxy-, Carboxy-, Carboxylat-, Carbonsäureester-, Carbonsäureanhydridgruppe oder eine Amino-Gruppe NHR' mit R' = Wasserstoff, Alkylrest mit 1 bis 10 Kohlenstoffatomen, insbesondere Methyl, Ethyl oder i- oder n-Propyl, vorzugsweise n-Propyl, oder Arylrest mit 6 bis 22 Kohlenstoffatomen, insbesondere eine NH₂-Gruppe, und/oder eine NCO-Gruppe oder ein -CO-NH-R₃-NH₂-Rest,
- n: eine Zahl von 75 bis 215, insbesondere 80 bis 200 und besonders bevorzugt von 100 bis 180 oder 110 bis 160, und
- a: eine Zahl von mindestens 1, insbesondere im Bereich von oder zwischen 1 bis 140, besonders bevorzugt im Bereich von 5 bis 100 und ferner bevorzugt im Bereich von 10 bis 50,
und/oder
mindestens ein Copolymer bzw. Blockcopolymer der allgemeinen Formel V

B-[R²-(O-Si(R¹)₂)ₙ-O-Si(R¹)₂-R²-NH-CO-NH-R³-NH-CO-V-R⁴-W-CO-NH-R³-NH-CO-NH]ₐ-B' (V)

mit
- R1: unabhängig voneinander ein einwertiger gegebenenfalls durch Fluor oder Chlor substituierter Kohlenwasserstoffrest mit 1 bis 20 Kohlenstoffatomen, insbesondere Methyl,
- R2: unabhängig voneinander ein Alkylenrest mit 1 bis 20 Kohlenstoffatomen, in dem einander nicht benachbarte Methyleneinheiten durch Gruppen -O- ersetzt sein können, insbesondere ein Methylen-, Ethylen- oder Propylenrest, oder ein Arylenrest mit 6 bis 22 Kohlenstoffatomen,
- R3: ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können, insbesondere ein Methylen-, Ethylen- oder Propylenrest, oder ein Arylenrest mit 6 bis 22 Kohlenstoffatomen,
- R4: ein gegebenenfalls durch Fluor, Chlor, C1-C6-Alkyl- oder C1-C6-Alkylester substituierter Alkylenrest mit 1 bis 700 C-Atomen, in dem einander nicht benachbarte Methyleneinheiten durch Gruppen -O-, - COO-, -OCO oder -OCOO- ersetzt sein können,
- V, W: unabhängig voneinander -O- oder -NR5-, wobei R5 Wasserstoff, ein Alkylrest mit 1 bis 10 C-Atomen, insbesondere Methyl, Ethyl oder i- oder n-Propyl, oder ein Arylrest mit 6 bis 22 C-Atomen ist,
- B, B': unabhängig voneinander eine Endgruppe, welche kovalent an das Polymer gebunden ist, insbesondere eine Hydroxy-, Carboxy-, Carboxylat-, Carbonsäureester-, Carbonsäureanhydrid- oder Amino-Gruppe NHR' mit R' = Wasserstoff, Alkylrest mit 1 bis 10 Kohlenstoffatomen, insbesondere Methyl, Ethyl oder i- oder n-Propyl, vorzugsweise n-Propyl, oder Arylrest mit 6 bis 22 Kohlenstoffatomen, insbesondere eine NH₂-Gruppe, oder eine NCO-Gruppe oder ein -CO-NH-R₃-NH₂-Rest,
- n: eine Zahl von 75 bis 215, insbesondere 80 bis 200 und besonders bevorzugt von 100 bis 180 oder 110 bis 160,
- a: eine Zahl von mindestens 1, insbesondere im Bereich von oder zwischen 1 bis 140, besonders bevorzugt im Bereich von 5 bis 100 und ferner bevorzugt im Bereich von 10 bis 50, ist.

Bei den Endgruppen B und B' kann es sich um reaktive oder nicht reaktive Endgruppen handeln. Hierbei ist es möglich, dass beide Endgruppen B und B' nicht reaktive Endgruppen darstellen oder dass beide Endgruppen B und B' reaktive Endgruppen darstellen. Ferner kann es sich bei der einen Endgruppe B um eine reaktive Endgruppe und bei der anderen Endgruppe B' um eine nicht reaktive Endgruppe handeln. Demgemäß ist es möglich, dass die Endgruppen B und B' gleich oder verschieden sein können. In einer bevorzugten Ausführungsform kann in der Verbindung IV oder in der Verbindung V die Endgruppe B eine Hydroxy-, Carboxy-, Carboxylat-, Carbonsäureester-, Carbonsäureanhydridgruppe oder eine Amino-Gruppe NHR' mit R' = Wasserstoff, Alkylrest mit 1 bis 10 Kohlenstoffatomen, insbesondere Methyl, Ethyl oder i- oder n-Propyl, vorzugsweise n-Propyl, oder Arylrest mit 6 bis 22 Kohlenstoffatomen, darstellen, wobei eine NH₂-Gruppe besonders bevorzugt ist. In einer weiteren bevorzugten Ausführungsform kann in der Verbindung IV oder der Verbindung V die Endgruppe B' eine NCO-Gruppe oder ein -CO-NH-R₃-NH₂-Rest darstellen.

Als sehr zweckmäßig haben sich solche Copolymere bzw. Blockcopolmere gemäß den o.g. Formeln (IV) und (V) erwiesen, bei denen "n" im Bereich von 80 bis 200 und "a" im Bereich von 5 bis 100 oder im Bereich von 10 bis 50 liegt Besonders bevorzugt sind hierbei solche Copolymere bzw. Blockcopolmere gemäß den o.g. Formeln (IV) und (V), bei denen "n" im Bereich von 100 bis 180 und "a" im Bereich von 5 bis 100 oder im Bereich von 10 bis 50 liegt. Insbesondere sind auch solche Copolymere bzw. Blockcopolmere gemäß den o.g. Formeln (IV) und (V) besonders geeignet, um die der Erfindung zugrunde liegenden Probleme zu lösen, bei denen "n" im Bereich von 110 bis 160 und "a" im Bereich von 5 bis 1 00 oder im Bereich von 10 bis 50 liegt.

Bei der Angabe der Wiederholungseinheiten "a" handelt es sich in einer zweckmäßigen Ausgestaltung um die durchschnittliche Anzahl an Wiederholungseinheiten in dem Blockcopolymer bzw. Copolymer gemäß den Verbindungen (IV) und (V), wie es bei der Herstellung der erfindungsgemäßen Masterbatche erhalten wird. Bevorzugt handelt es sich bei der Angabe der Wiederholungseinheiten "a" um eine Absolutangabe.

Die aus den Komponenten A1) und A2) bzw. die aus den Komponenten A1), A5) und A2) gebildeten Copolymere bzw. Blockcopolymere, insbesondere in Form der Verbindungen gemäß den Formeln (IV) und (V), liegen in den nach dem erfindungsgemäßen Verfahren erhältlichen Masterbatches vorzugsweise in einer Menge von mindestens 10 Gewichtsprozent, vorzugsweise von mindestens 20 Gewichtsprozent, bezogen auf das Gesamtgewicht des Masterbatches, vor.

Die der Erfindung zugrunde liegende Aufgabe wird des Weiteren gelöst durch einen Polymerwerkstoff erhalten oder erhältlich durch Vermischen von mindestens einem Polymer und mindestens einem nach dem erfindungsgemäßen Verfahren erhaltenen oder erhältlichen Masterbatch. Das Polymer des Polymerwerkstoffs, auch Matrixpolymer oder polymeres Matrixmaterial genannt, kann dabei ausgewählt sein aus der Gruppe bestehend aus Thermoplasten, thermoplastischen Elastomeren, Elastomeren und Duromeren oder Mischungen hiervon. Insbesondere kann man das Polymer auswählen aus der Gruppe bestehend aus Polyolefinen, insbesondere Polyethylen, z.B. HD-PE, und/oder Polypropylen oder Propylencopolymeren, Polyamiden, Polyestern wie Polyethylenterephthalat und/oder Polybutylenterephthalat, Polymethylmethacrylat, Polyaryletherketonen, Polyacrylnitril, Polyethylennaphthalaten, Polyethersulfonen, Polyimiden, Polyketonen, Polyphenylensulfiden, Polyphenylensulfonen, Polysulfonen, Styrol-Butadien-Kautschuken, Acrylnitril-Butadien-Kautschuken, Naturkautschuken, thermoplastischen Elastomeren auf Basis von vernetztem Kautschuk, Ethylen-Vinylacetat-Copolymeren, Polyhydroxybutyrat, Polylactiden, Polyetherimiden, Polyoxymethylen, Polycarbonaten, Polystyrol, schlagzähmodifiziertem Polystyrol, Styrol-basiertem (Co)-Polymeren wie ABS, SAN, PS, HIPS und/oder ASA, Styrol-basierten thermoplastischen Elastomeren wie SEBS, olefinisch-basierten thermoplastischen Elastomeren wie LLDPE, EOC, TPV und/oder EVA, PE/Polyester-basierten thermoplastischen Elastomeren, Urethan-basierten thermoplastischen Elastomeren, Polyether-Block-Amiden (PE-BA), PVC, Polyurethanen, z.B. thermoplastischen Polyurethanen, und thermoplastischer Stärke oder beliebigen Mischungen hiervon, insbesondere Polyethylen, Polypropylen, Polyamiden, Polyethylenterephthalat und/oder Polybutylenterephthalat.

Die erfindungsgemäßen Polymerwerkstoffe lassen sich insbesondere durch Mischen mindestens eines polymeren Matrixmaterials mit den nach dem erfindungsgemäßen Verfahren erhältlichen Masterbatches, jeweils in geschmolzenem Zustand, und Abkühlen der Mischung erhalten.

Die nach dem erfindungsgemäßen Verfahren erhältlichen Masterbatche zeichnen sich durch eine hohe Verträglichkeit mit einer Vielzahl von Polymerwerkstoffen oder Blends hiervon aus.

Die der Erfindung zugrunde liegende Aufgabe wird des Weiteren gelöst durch einen Formkörper, erhalten oder erhältlich durch Spritzgießen, Extrudieren, Formpressen, Walzenrotation, Rotationsformen, Lasersintern, Fused Deposition Modelling (FDM), Granulieren und/oder Gießen des erfindungsgemäßen Polymerwerkstoffs.

Mit dem erfindungsgemäßen Verfahren gelingt es, auf zuverlässige und wirtschaftliche Weise Pigmente, deren Primärpartikel im Größenbereich von wenigen Nanometern bis einigen Mikrometern liegen können, in Masterbatches unter Ausschluss von Pigmentaggregaten und -agglomeraten in homogener Verteilung einzuarbeiten. Mit dem erfindungsgemäßen Verfahren ist es nicht nötig, einen einmal bereits aufgeschmolzenen und granulierten Polymerwerkstoff erneut aufzuschmelzen und zu granulieren. Hierdurch kann die thermische Belastung und damit auch ein Abbau des Polymermaterials verhindert bzw. zurückgedrängt werden. Man erhält einen höherwertigen, mit einem Masterbatch compoundierten Polymerwerkstoff.

Mit dem erfindungsgemäßen Verfahren gelingt es zudem, auf zuverlässige Weise Masterbatche zu erhalten, die sich unabhängig von der gewählten Konzentration sehr gut in polymere Matrixmaterialien einarbeiten lassen, ohne dass die Pigmente oder Wirkstoffadditive verklumpen oder dass Inhomogenitäten in den compoundierten Polymerwerkstoffen auftreten.

Mit der dem erfindungsgemäßen Verfahren immanenten Vorgehensweise geht der Vorteil einher, dass nach der Dispergierung der Farbmittel, insbesondere Pigmente, und/oder Funktionsadditive in die, insbesondere fluide, Siloxanverbindungen (A1) eine weitere Dispergierung und Homogenisierung der Farbmittel in der ausreagierten Polymermatrix im Extruder erfolgen kann, wodurch die Verteilung des Farbmittels und/oder Funktionsadditive nochmals verbessert wird. Besonders interessant ist auch, dass sich Farbmittel und Funktionsadditive über einen sehr großen Konzentrationsbereich in die Copolymere bzw. Blockcopolymere des Masterbatches einarbeiten lassen.

Die nach dem erfindungsgemäßen Verfahren erhaltenen Masterbatche tragen nach Eintrag in das polymere Matrixmaterial zu einem verbesserten Fließverhalten der Schmelze dieses Matrixmaterials bei. Hierdurch können zum Beispiel auch sehr komplexe Spritzgussteile erhalten werden, und zwar sogar mit sehr zügiger Spritzformbeladung. Auch gelingt bei Extrusionsanwendungen eine signifikante Durchsatzsteigerung.

Demgemäß weisen die erfindungsgemäße Masterbatche regelmäßig keinen Konzentrationsgradienten des Farbmittels oder des Funktionsadditivs im Masterbatch auf. Auch zeichnen sich die erfindungsgemäßen Masterbatche durch eine hohe Zugfestigkeit, hohe thennische Beständigkeit, ein ausgezeichnetes Spannungs-Dehnungs-Verhalten, ein vorteilhaftes rheologisches Verhalten sowie durch ein ausgezeichnetes Permeationsverhalten aus. Besonders vorteilhaft ist auch die gute Verträglichkeit der erfindungsgemäßen Masterbatche gegenüber einer Vielzahl an polymeren Matrixmaterialien im Bereich der üblichen Einsatzkonzentrationen.

Der vorliegenden Erfindung liegt die überraschende Erkenntnis zugrunde dass sich bei Anwendung des erfindungsgemäßen Herstellverfahrens Masterbatche erhalten lassen, die sich als universale Masterbatche eignen, d.h. die in eine breite Palette an polymeren Matrixmaterialien eingearbeitet werden können, und zwar auf wirtschaftliche und zuverlässige Weise. Ferner wurde überraschend gefunden, dass sich mit den nach dem erfindungsgemäßen Verfahren erhältlichen Masterbatches der sogenannte "plate-out"-Effekt unterbinden bzw. jedenfalls zurückdrängen lässt. Aufgrund der guten Verträglichkeit dieser erfindungsgemäßen Masterbatches kommt es regelmäßig auch nicht zur Schlierenbildung bei der Einarbeitung in polymere Matrixmaterialien. Insbesondere ist auch von Vorteil, dass mit dem erfindungsgemäßen Verfahren Farbmittel, z.B. Pigmente, Funktionsadditive und Füllstoffe sich verweilzeitunabhängig und ohne thermische Belastung in den Masterbatch einarbeiten lassen. Demgemäß gelingt überraschender Weise auch die Einarbeitung von schwierig zu dispergierenden Pigmenten, Additiven und/oder Füllstoffen in nahezu beliebige Kunststoffmatrixmaterialien. Von besonderem Vorteil ist auch, dass hierbei auf den Einsatz von Dispergierhilfsmitteln vollständig verzichtet werden kann. Außerdem hat sich überraschend gezeigt, dass die erfindungsgemäßen Masterbatche nicht zu einer Beeinträchtigung der mechanischen Eigenschaften der mit diesen Masterbatches versehenen polymeren Werkstoffe führen. Zu den geprüften mechanischen Eigenschaften zählen beispielsweise der E-Modul, die Bruchspannung und die Bruchdehnung, die anhand der DIN EN ISO 527 mittels einer Zugprüfmaschine ermittelt werden können.

Im Folgenden wird die Erfindung anhand von Ausführungsbeispielen näher erläutert.

### Beispiele:

### Allgemeine Verfahrensbeschreibung:

Die Herstellung der Auswahlmuster erfolgte auf einem Labor-Doppelschneckenextruder (DSE) mit 25 mm Schneckendurchmesser. Der DSE war mit Wäge- und Dosiertechnik für Flüssigkeiten ausgestattet. Die Zudosierung des pigmentbeladenen Silikonöls und des Diisocyanates erfolgte im Einzugsbereich des Extruders in eine auf 40°C temperierte fördernde Zone. Die Diisocanat-Komponente und das in Form eines Silikonöl vorliegende Polydimethylsiloxan wurden im äquimolaren Verhältnis eingesetzt. Durch Zugabe des Diisocyanates setzte im Extruder unmittelbar die Bildungsreaktion für das Blockcopolymer und damit auch die Bildung des Masterbatches ein. Im weiteren Verlauf des Extrusionsprozesses wurden alle Muster auf eine Temperatur von 190°C erwärmt. Der Austrag der gebildeten Masterbatches erfolgte durch eine Lochplatte in ein Wasserbad. In diesem wurden die Masterbatchstränge abgekühlt und anschließend in einem Stranggranulator zu Granulat verarbeitet. Das Pigment, welches für die Masterbatchherstellung verwendet wurde, war ein dispergierhartes Kobalt-Aluminium-Spinell (Kobaltblau - Sicopalblau K6310). Das Pigment wurde vor der Masterbatchherstellung zunächst in Aminopropyl-terminiertes Polydimethylsiloxan mittels eines Labordissolvers (1000 U/min, 10 min) eingearbeitet. Um eine Feindispergierung des Pigmentes kleiner 10 µm zu erhalten, wurde die erhaltene Paste aus 50 Gew.-% Pigment und Aminopropyl-terminierten Polydimethylsiloxan in zwei Reibgängen auf einem Labordreiwalzreibstuhl zu einer Paste ausdispergiert, die dem Extruder zugeführt wurde. Der Dispergiergrad wurde mittels eines Grindometers überprüft.

### Beispiel 1:

4,4'-Diisocyanatodicyclohexylmethan und ein mit 50 Gew.-% mit dem dispergierharten Pigment Kobalt-Aluminium-Spinell (Kobaltblau - Sicopalblau K6310) beladenes aminopropylterminiertes Polydimethylsiloxan als Silikonöl mit einer mittleren Molmasse von 10131 g/mol wurden entsprechend der allgemeinen Verfahrensbeschreibung zu Masterbatches umgesetzt. Man erhielt ein rieselfähiges Granulat.

3 Gew.-% dieses Masterbatches in Granulatform wurden mittels einer Spritzgussmaschine in ein polymeres Matrixmaterial eingearbeitet. Als polymere Matrixmaterialien kamen ein Polypropylen-Copolymer, Polyamid 6 und Polyethylenterephthalat zum Einsatz.

Die erhaltenen Formteile zeigten für alle untersuchten Materialien saubere, homogene und störungsfreie Oberflächen. Die Masterbatches führten bei den drei vorangehend genannten Polymeren zu homogen durchgefärbten Bauteilen, wobei keine makroskopischen Entmischungsfehler in Folge von Unverträglichkeiten mit dem Masterbatch detektiert werden konnten. Die Masterbatches zeigten auch keine signifikante Beeinflussung der mechanischen Eigenschaften der modifizierten Werkstoffe.

### Beispiel 2 (erfindungsgemäß):

4,4'-Diisocyanatodicyclohexylmethan und ein mit 50 Gew.-% mit dem dispergierharten Pigment Kobalt-Aluminium-Spinell (Kobaltblau - Sicopalblau K6310) beladenes aminopropylterminiertes Polydimethylsiloxan als Silikonölgemisch bestehend aus 60 Gew.-% einer ersten Komponente (Komponente A) mit einer mittleren Molmasse von 10131 g/mol und 40 Gew.-% einer weiteren Komponente (Komponente B) mit einer mittleren Molmasse von 2923 g/mol wurden entsprechend der beschriebenen allgemeinen Verfahrensbeschreibung zu Masterbatches umgesetzt. Man erhielt ein rieselfähiges Granulat. 3 Gew.-% des Masterbatches in Granulatform wurden mittels einer Spritzgussmaschine in ein polymeres Matrixmaterial eingearbeitet. Als polymere Matrixmaterialien kamen ein Polypropylen-Copolymer, Polyamid 6 und Polyethylenterephthalat zum Einsatz. Die erhaltenen Formteile zeigten für alle untersuchten Materialien homogene und störungsfreie Oberflächen. Die Masterbatches führten bei allen Polymeren zu homogen durchgefärbten Bauteilen, wobei keine makroskopischen Entmischungsfehler in Folge von Unverträglichkeiten mit dem Masterbatch detektiert werden konnten. Die Masterbatches zeigten keine signifikante Beeinflussung der mechanischen Eigenschaften der modifizierten Werkstoffe.

Aufgrund der veränderten Zusammensatzung der Rezeptur resultierte im Beispiel 2 ein härteres und weniger elastisches Granulat. Bedingt durch den erhöhten Anteil an Hamstoffhartsegmenten in der Masterbatchstruktur zeigte das Granulat eine höhere Viskosität als das Granulat aus Beispiel 1.

### Beispiel 3 (nicht erfindungsgemäß):

4,4'-Diisocyanatodicyclohexylmethan und ein mit 50 Gew.-% mit dem dispergierharten Pigment Kobalt-Aluminium-Spinell (Kobaltblau - Sicopalblau K6310) beladenes aminopropylterminiertes Polydimethylsiloxan als Silikonöl mit einer mittleren Molmasse von 2923 g/mol wurden entsprechend der beschriebenen allgemeinen Verfahrensbeschreibung zu Masterbatches umgesetzt. Man erhielt ein rieselfähiges Granulat. 3 Gew.-% des Masterbatches in Granulatform wurden mittels einer Spritzgussmaschine in ein polymeres Matrixmaterial eingearbeitet. Als polymere Matrixmaterialien kamen ein Polypropylen-Copolymer, Polyamid 6 und Polyethylenterephthalat zum Einsatz. Die erhaltenen Formteile zeigten für alle untersuchten Materialien ästhetische Beeinträchtigungen. Die Masterbatches führten zwar bei allen Polymeren zu durchgefärbten Formteilen, allerdings wurden makroskopische Entmischungsfehler in Folge von Unverträglichkeiten mit dem Masterbatch beobachtet.

### Beispiel 4 (nicht erfindungsgemäß):

Als Ausgangsmaterialien für die Herstellung des Auswahlmusters 4 wurde das aliphatische 4,4'-Diisocyanatodicyclohexylmethan und ein mit 50 Gew.-% mit dem dispergierharten Pigment Kobalt-Aluminium-Spinell (Kobaltblau - Sicopalblau K6310) beladenes aminopropylterminiertes Polydimethylsiloxan als Silikonöl mit einer mittleren Molmasse von 1030 g/mol verwendet.

Die Ausgangsstoffe wurden entsprechend der beschriebenen Prozedur zu Masterbatches umgesetzt. Das gut rieselfähige Granulat wurde zu 3 Gew.-% in Polypropylen Copolymer, Polyamid 6 und Polyethylenterephthalat mittels einer Spritzgussmaschine eingearbeitet. Die erhaltenen Formteile zeigten für alle untersuchten Materialien inhomogene und störungsbehaftete Oberflächen. Die Masterbatches führten bei allen Polymeren zu durchgefärbten Formteilen. Es konnten makroskopische Entmischungsfehler in Folge von Unverträglichkeiten mit dem Masterbatch detektiert werden. Die Masterbatches zeigten eine deutliche Beeinflussung der mechanischen Eigenschaften der modifizierten Werkstoffe.

## Patentansprüche

1. Verfahren zur Herstellung eines Masterbatches, umfassend die folgenden Schritte:
a1) Zurverfügungstellung mindestens einer mit mindestens einer, insbesondere mit zwei oder mehr, Amino-, Hydroxy-, Carboxy-, Carboxylat-, Carbonsäureester- oder Carbonsäureanhydrid-Gruppen terminierten Siloxanverbindung der allgemeinen Formel (Komponente A1): 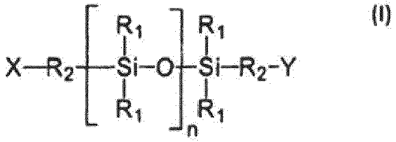 mit
R1 unabhängig voneinander ein einwertiger, gegebenenfalls durch Fluor oder Chlor substituierter, Kohlenwasserstoffrest mit 1 bis 20 Kohlenstoffatomen, insbesondere Methyl,
R2 unabhängig voneinander ein Alkylenrest mit 1 bis 20 Kohlenstoffatomen, in dem einander nicht benachbarte Methyleneinheiten durch Gruppen -O- ersetzt sein können, oder ein Arylenrest mit 6 bis 22 Kohlenstoffatomen, insbesondere ein Propylenrest,
X, Y unabhängig voneinander eine Hydroxy-, Carboxy-, Carboxylat-, Carbonsäureester-, Carbonsäureanhydrid- oder Amino-Gruppe NHR' mit R' = Wasserstoff, Alkylrest mit 1 bis 10 Kohlenstoffatomen oder Arylrest mit 6 bis 22 Kohlenstoffatomen, insbesondere eine NH₂-Gruppe, und
n eine Zahl von 75 bis 215, insbesondere 80 bis 200;
a2) Zurverfügungstellung mindestens einer mindestens bifunktionellen, insbesondere bifunktionellen, Verbindung (Komponente A2) die zwei oder mehr, insbesondere zwei, mit X und Y, insbesondere durch Polyaddition oder Polykondensation, verknüpfbare Gruppen aufweist;
a3) Zurverfügungstellung mindestens eines Farbmittels (Komponente A3) und/oder
a4) Zurverfügungstellung mindestens eines Funktionsadditivs (Komponente A4);
a5) die Zurverfügungstellung mindestens einer mit mindestens einer, insbesondere mit zwei oder mehr, Amino-, Hydroxy-, Carboxy-, Carboxylat-, Carbonsäureester- oder Carbonsäureanhydrid-Gruppen terminierten Siloxanverbindung der allgemeinen Formel (Komponente A5): 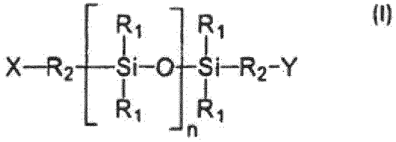 mit
R1 unabhängig voneinander ein einwertiger, gegebenenfalls durch Fluor oder Chlor substituierter, Kohlenwasserstoffrest mit 1 bis 20 Kohlenstoffatomen, insbesondere Methyl,
R2 unabhängig voneinander ein Alkylenrest mit 1 bis 20 Kohlenstoffatomen, in dem einander nicht benachbarte Methyleneinheiten durch Gruppen -O- ersetzt sein können, oder ein Arylenrest mit 6 bis 22 Kohlenstoffatomen, insbesondere ein Propylenrest,
X, Y unabhängig voneinander eine Hydroxy-, Carboxy-, Carboxylat-, Carbonsäureester-, Carbonsäureanhydrid- oder Amino-Gruppe NHR' mit R' = Wasserstoff, Alkylrest mit 1 bis 10 Kohlenstoffatomen oder Arylrest mit 6 bis 22 Kohlenstoffatomen, insbesondere eine NH₂-Gruppe, und
n eine Zahl von 20 bis 74, insbesondere von 25 bis 70;
b) Mischen der Komponenten gemäß a1), a2), a3) und a5) oder gemäß a1), a2), a4) und a5) oder gemäß a1), a2), a3), a4) und a5);
c) Polymerbildung der Mischung gemäß b) und
d) Aufschmelzen und/oder Schmelzeflüssighalten des in Schritt c) gebildeten Polymerisats, insbesondere im Extruder oder im diskontinuierlichen Innenmischer, und
e) Überführen des Polymerisats gemäß Schritt d) in einen festen Aggregatzustand, insbesondere in Granulat- oder Pulverform.

2. Verfahren nach Anspruch 1, **dadurch gekennzeichnet, dass**
für die in Schritt a1) zur Verfügung gestellte Verbindung n eine Zahl im Bereich von 100 bis 180, insbesondere im Bereich von 110 bis 160, darstellt und/oder dass für die in Schritt a5) zur Verfügung gestellte Verbindung n eine Zahl im Bereich von 30 bis 60, insbesondere im Bereich 35 bis 50, darstellt und/oder dass die in Schritt a1) und/oder a5) zur Verfügung gestellte Verbindung bei Raumtemperatur (20°C) in flüssiger Form vorliegt.

3. Verfahren nach einem der vorhergehenden Ansprüche, **dadurch gekennzeichnet, dass** die in Schritt a1) zur Verfügung gestellte Verbindung eine Siloxanverbindung A1, insbesondere ein α,ω-Aminopropyl-terminiertes Polydimethylsiloxan, mit einer mittleren Molmasse im Bereich von 6.000 bis 14.000 g/mol, bevorzugt im Bereich von 9.000 bis 13.000 g/mol, und/oder dass die in Schritt a5) zur Verfügung gestellte Siloxanverbindung, insbesondere ein α,ω-Aminopropyl-terminiertes Polydimethylsiloxan, mit einer mittleren Molmasse im Bereich von 2.000 bis 5.500 g/mol, insbesondere im Bereich von 2.500 bis 4.000 g/mol darstellt.

4. Verfahren nach einem der vorhergehenden Ansprüche, **dadurch gekennzeichnet, dass** das bifunktionelle Monomer (Komponente A2) gemäß a2) ein Diisocyanat der allgemeinen Formel (II):
O=C=N-R₃-N=C=O (II)
mit
R3 ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen darstellt.

5. Verfahren nach einem der vorhergehenden Ansprüche, **dadurch gekennzeichnet, dass** nach dem Mischen der Komponenten gemäß Schritt b), insbesondere unmittelbar nach Beendigung der Zugabe der Komponenten, mindestens ein Kettenextender (Komponente B)) mit der allgemeinen Formel III:
H-V-R₄-W-H (III)
mit
R4 ein gegebenenfalls durch Fluor, Chlor, C1-C6-Alkyl- oder C1-C6-Alkylester substituierter Alkylenrest mit 1 bis 700 C-Atomen, in dem einander nicht benachbarte Methyleneinheiten durch die Gruppen -O-, - COO-, -OCO- oder -OCOO- ersetzt sein können, und
V, W unabhängig voneinander -O- oder -NR", wobei R" Wasserstoff, ein Alkylrest mit 1 bis 10 C-Atomen oder ein Arylrest mit 6 bis 22 C-Atomen ist,
zugesetzt wird.

6. Verfahren nach einem der vorhergehenden Ansprüche, **dadurch gekennzeichnet, dass** das mindestens eine Farbmittel ein Pigment und/oder einen Farbstoff, insbesondere Pigment, darstellt oder umfasst und/oder dass das Funktionsadditiv Nukleierungsmittel, Nanofüllstoffe, Schichtsilikaten, insbesondere delaminierten Schichtsilikaten, Stabilisatoren, insbesondere Thermostabilisatoren und/oder Lichtstabilisatoren, Antistatika, Flammschutzmittel, Haftvermittler, Antiblockmittel, Verarbeitungshilfsmittel, Treibmittel, antimikrobielle Mittel, insbesondere antibakterielle Mittel, und Mischungen hiervon umfasst.

7. Verfahren nach einem der vorhergehenden Ansprüche, **dadurch gekennzeichnet, dass** die Verbindungen der allgemeinen Formel (I) (Komponente A1) und die bifunktionelle Verbindung (Komponente A2) in äquimolaren Mengenverhältnissen eingesetzt werden.

8. Verfahren nach einem der vorhergehenden Ansprüche, **dadurch gekennzeichnet, dass** man in Schritt b) 1 bis 90 Gew.-%, vorzugsweise 5 bis 85 Gew.-% und besonders bevorzugt 10 bis 80 Gew.-%, bezogen auf das Gewicht des in Schritt e) erhaltenen Polymers, an Farbmittel, insbesondere Pigment, und/oder 1 bis 80 Gew.-%, bevorzugt 2 bis 70 Gew.-% und besonders bevorzugt 5 bis 50 Gew.-%, bezogen auf das Gewicht des in Schritt e) erhaltenen Polymers, an Funktionsadditiv zugibt.

9. Verfahren nach einem der vorhergehenden Ansprüche, **dadurch gekennzeichnet, dass** Schritt c) und Schritt d) sowie gegebenenfalls auch Schritt b) in einem Extruder umfassend mindestens ein förderndes Element stattfinden
und dass
der Extruder in Schritt c) und gegebenenfalls auch in Schritt d) entgast, insbesondere vakuumentgast, wird
und dass
die Komponente A2 im Bereich mindestens eines fördernden Elements, insbesondere mittels eines Sprühkopfs, besonders bevorzugt eines Kapillarsprühkopfs, zugemischt wird.

10. Verfahren nach einem der vorhergehenden Ansprüche, ferner umfassend
a6) Zurverfügungstellung von mindestens einem Dispergierhilfsmittel ausgewählt aus der Gruppe bestehend aus Wachse, insbesondere PE-Wachse, Ethylenvinylacetat-Copolymer-Wachse und/oder Montanwachse, Metallseifen, insbesondere Mg-, K- und/oder Zn-Stearate, organischen Fettsäuren und organischen Fettsäureestern oder deren beliebige Mischungen,
wobei in Schritt b) die Komponenten gemäß a1), a2), a3) und a6) oder gemäß a1), a2), a4) und a6) oder gemäß a1), a2), a3), a4) und a6) oder gemäß a1), a2) a3), a5) und a6) oder gemäß a1), a2), a4), a5) und a6) oder gemäß a1), a2), a3), a4), a5) und a6) gemischt werden.

11. Verfahren nach einem der vorhergehenden Ansprüche, **dadurch gekennzeichnet, dass** man die Komponente gemäß a1) und a3) oder a1) und a4) oder a1), a3) und a4) oder a1), a5) und a3) oder a1), a5) und a4) oder a1), a5), a3) und a4), insbesondere mittels Einmischens oder Extrusion, vermischt und die erhaltene Mischung, insbesondere in flüssiger oder pastöser Form, mit der Komponente a2), insbesondere mittels Einmischens oder Extrusion, vermischt, insbesondere die Komponente a2) zu der erhaltenen Mischung hinzufügt, und/oder dass man die Komponente gemäß a3) oder a4) oder a3) und a4) mit einem ersten Anteil der Komponente gemäß a1) vermischt und dass man die erhaltene Mischung, insbesondere in flüssiger oder pastöser Form, mit dem verbleibenden Anteil der Komponente gemäß a1), insbesondere mittels Einmischens oder Extrusion, vermischt.

12. Masterbatch, erhalten oder erhältlich gemäß einem Verfahren nach einem der vorhergehenden Ansprüche, insbesondere in Granulatform vorliegend.

13. Masterbatch nach Anspruch 12, enthaltend
mindestens ein Farbmittel (Komponente A3), insbesondere mindestens ein Pigment, und/oder enthaltend mindestens ein Funktionsadditiv (Komponente A4).

14. Masterbatch nach Anspruch 12 oder 13, enthaltend mindestens ein Blockcopolymer der allgemeinen Formel IV
B-[R₂-(O-Si(R₁)₂)ₙ-O-Si(R₁)₂-R₂-NH-CO-NH-R₃-NH-CO-NH]ₐ-B' (IV)
mit
R1 unabhängig voneinander ein einwertiger gegebenenfalls durch Fluor oder Chlor substituierter Kohlenwasserstoffrest mit 1 bis 20 Kohlenstoffatomen,
R2 unabhängig voneinander ein Alkylenrest mit 1 bis 20 Kohlenstoffatomen, in dem einander nicht benachbarte Methyleneinheiten durch Gruppen -O-ersetzt sein können, oder ein Arylenrest mit 6 bis 22 Kohlenstoffatomen,
R3 ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohl enstoffatomen,
B, B' unabhängig voneinander eine Endgruppe, welche kovalent an das Polymer gebunden ist,
n eine Zahl von 75 bis 215, insbesondere 80 bis 200 und besonders bevorzugt von 100 bis 180 oder 110 bis 160, und
a eine Zahl von mindestens 1, insbesondere im Bereich von oder zwischen 1 bis 140, insbesondere im Bereich von 5 bis 100,
und/oder
mindestens ein Blockcopolymer der allgemeinen Formel V
B-[R²-(O-Si(R¹)₂)ₙ-O-Si(R¹)₂-R²-NH-CO-NH-R³-NH-CO-V-R⁴-W-CO-NH-R³-NH-CO-NH]ₐ-B' (V)
mit
R1 unabhängig voneinander ein einwertiger gegebenenfalls durch Fluor oder Chlor substituierter Kohlenwasserstoffrest mit 1 bis 20 Kohlenstoffatomen,
R2 unabhängig voneinander ein Alkylenrest mit 1 bis 20 Kohlenstoffatomen, in dem einander nicht benachbarte Methyleneinheiten durch Gruppen -O-ersetzt sein können, oder ein Arylenrest mit 6 bis 22 Kohlenstoffatomen,
R3 ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können, oder ein Arylenrest mit 6 bis 22 Kohlenstoffatomen,
R4 ein gegebenenfalls durch Fluor, Chlor, C1-C6-Alkyl- oder C1-C6-Alkylester substituierter Alkylenrest mit 1 bis 700 C-Atomen, in dem einander nicht benachbarte Methyleneinheiten durch Gruppen -O-, - COO-, -OCO oder - OCOO- ersetzt sein können,
V, W unabhängig voneinander -O- oder -NR5-, wobei R5 Wasserstoff, ein Alkylrest mit 1 bis 10 C-Atomen oder ein Arylrest mit 6 bis 22 C-Atomen ist,
B, B' unabhängig voneinander eine Endgruppe, welche kovalent an das Polymer gebunden ist,
n eine Zahl von 75 bis 215, insbesondere 80 bis 200 und besonders bevorzugt von 100 bis 180 oder 110 bis 160,
a eine Zahl von mindestens 1, insbesondere im Bereich von oder zwischen 1 bis 140, insbesondere im Bereich von 5 bis 100,
ist.

15. Masterbatch nach Anspruch 14, **dadurch gekennzeichnet, dass**
bei den Blockcopolymeren gemäß Formel (IV) und/oder (V) "n" im Bereich von 80 bis 200 und "a" im Bereich von 5 bis 100 oder im Bereich von 10 bis 50 liegt oder dass "n" im Bereich von 100 bis 180 und "a" im Bereich von 5 bis 100 oder im Bereich von 10 bis 50 liegt oder dass "n" im Bereich von 110 bis 160 und "a" im Bereich von 5 bis 100 oder im Bereich von 10 bis 50 liegt.

16. Polymerwerkstoff erhalten oder erhältlich durch Vermischen von mindestens einem Polymer und mindestens einem Masterbatch nach einem der Ansprüche 12 bis 15.

17. Polymerwerkstoff nach Anspruch 16, **dadurch gekennzeichnet, dass** das Polymer ausgewählt ist aus der Gruppe bestehend aus Thermoplasten, thermoplastischen Elastomeren, Elastomeren und Duromeren oder Mischungen hiervon.

18. Formkörper, erhalten oder erhältlich durch
Spritzgießen, Extrudieren, Formpressen, Walzenrotation, Rotationsformen, Lasersintern, Fused Deposition Modelling (FDM), Granulieren und/oder Gießen des Polymerwerkstoffs nach Anspruch 16 oder 17.

19. Verwendung des Masterbatches nach einem der Ansprüche 12 bis 15 zur Einfärbung Polymerwerkstoffen und/oder zur Ausstattung von Polymerwerkstoffen mit Funktionsadditiven.

## Claims

1. A method for producing a masterbatch, comprising the following steps:
a1) Providing at least one siloxane compound, terminated with at least one, in particular with two or more amino-, hydroxy-, carboxy-, carboxylate-, carboxylic acid ester or carboxylic acid anhydride groups with the general formula (component A1): 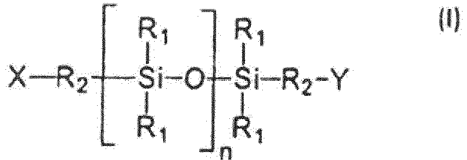 with
R1 Independently of each other, a monovalent hydrocarbon residue, possibly substituted with fluorine or chlorine, with 1 to 20 carbon atoms, in particular methyl,
R2 Independently of each other, an alkyl residue with 1 to 20 carbon atoms, in which methyl units which are not adjacent to each other can be replaced by groups -O-, or an aryl residue with 6 to 22 carbon atoms, in particular a propyl residue,
X, Y Independently of each other, a hydroxy, carboxy, carboxylate, carboxylic acid ester, carboxylic acid hydride or amino group NHR' with R' = hydrogen, alkyl residue with 1 to 10 carbon atoms or aryl residue with 6 to 22 carbon atoms, in particular an NH₂ group, and
n A number from 75 to 215, in particular 80 to 200;
a2) Providing at least one at least bifunctional, in particular bifunctional, compound (component A2), which comprises two or more, in particular two, groups that can be linked to X and Y, in particular by means of polyaddition or polycondensation;
a3) Providing at least one dye (component A3) and/or
a4) Providing at least one functional additive (component A4);
a5) Providing at least one siloxane compound, terminated with at least one, in particular with two or more amino-, hydroxy-, carboxy-, carboxylate-, carboxylic acid ester or carboxylic acid anhydride groups with the general formula (component A5): 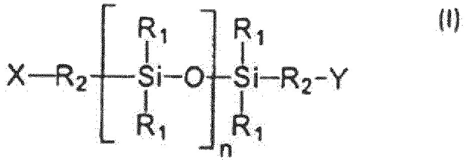 with
R1 Independently of each other, a monovalent hydrocarbon residue, possibly substituted with fluorine or chlorine, with 1 to 20 carbon atoms, in particular methyl,
R2 Independently of each other, an alkyl residue with 1 to 20 carbon atoms, in which methyl units which are not adjacent to each other can be replaced by groups -O-, or an aryl residue with 6 to 22 carbon atoms, in particular a propyl residue,
X, Y Independently of each other, a hydroxy, carboxy, carboxylate, carboxylic acid ester, carboxylic acid hydride or amino group NHR' with R' = hydrogen, alkyl residue with 1 to 10 carbon atoms or aryl residue with 6 to 22 carbon atoms, in particular an NH₂ group, and
n A number of 20 to 74, in particular 25 to 70;
b) mixing the components according to a1), a2), a3) and a5), or according to a1), a2), a4) and a5), or according to a1), a2), a3), a4) and a5);
c) Polymer forming of the mixture according to b), and
d) Melting and/or retaining the molten liquid state of the polymerisate formed in step c), in particular in the extruder or in the discontinuous internal mixer, and
e) Transferring the polymerisate according to step d) into a solid aggregate state, in particular in granulate or powder form.

2. The method according to claim 1, **characterized in that**
for the compound provided in step a1), n represents a number in the region of 100 to 180, in particular in the region of 110 to 160, and/or that for the compound provided in step a5), n represents a number in the region of 30 to 60, in particular in the region of 35 to 50, and/or that the compound provided in step a1) and/or a5) is present in a fluid state at room temperature (20°C).

3. The method according to any one of the preceding claims, **characterized in that** the compound provided in step a1) is a siloxane compound A1, in particular an *α*,*ω* aminopropyl-terminated polydimethyl siloxane, with an average molar mass in the region of 6,000 to 14,000 g/mol, preferably in the region of 9,000 to 13,000 g/mol, and/or that the siloxane compound provided in step a5) is in particular an *α*,*ω* aminopropyl-terminated polydimethyl siloxane, with an average molar mass in the region of 2,000 to 5,500 g/mol, in particular in the region of 2,500 to 4,000 g/mol.

4. The method according to any one of the preceding claims, **characterized in that** the bifunctional monomer (component A2) according to a2) is a diisocyanate with the general formula (II):
O=C=N-R₃-N=C=O (II)
with
R3 An alkyl residue that is possibly substituted with fluorine or chlorine with 1 to 20 carbon atoms, in which methyl units which are not adjacent to each other can be replaced by groups -O-, or an aryl residue with 6 to 22 carbon atoms.

5. The method according to any one of the preceding claims, **characterized in that** after mixing the components according to step b), in particular directly after ending the addition of the components, at least one chain extender (component B)) is added with the general formula III:
H-V-R₄-W-H (III)
with
R4 An alkyl residue which is possibly substituted with fluorine, chlorine, C1-C6-alkyl- or C1-C6-alkyl ester, with 1 to 700 C atoms, in which methyl units which are not adjacent to each other can be replaced by groups -O-, -COO-,-OCO- or -OCOO-, and
V, W Independently of each other -O- or -NR5, wherein R5 is hydrogen, an alkyl residue with 1 to 10 C atoms or an aryl residue with 6 to 22 C atoms.

6. The method according to any one of the preceding claims, **characterized in that** the at least one dyeing agent is or comprises a pigment and/or a dye, in particular a pigment and/or that the functional additive comprises nucleation agents, nanofil substances, phyllosilicates, in particular delaminated phyllosilicates, stabilisers, in particular thermostabilisers and/or light stabilisers, antistatic agents, flame retardant agents, bonding agents, anti-blocking agents, processing aids, propellants, antimicrobial agents, in particular anti-bacterial agents, and mixtures of these.

7. The method according to any one of the preceding claims, **characterized in that** the compounds with the general formula (I) (component A1) and the bifunctional compound (component A2) are used in equimolar quantity ratios.

8. The method according to any one of the preceding claims, **characterized in that** in step b), 1 to 90 weight percent, preferably 5 to 85 weight percent and in a particularly preferred manner, 10 to 80 weight percent, related to the weight of the polymer obtained in step e) of the dyeing agent, in particular the pigment, and/or 1 to 80 weight percent, preferably 2 to 70 weight percent, and in a particularly preferred manner 5 to 50 weight percent related to the weight of the polymer obtained in step e) of functional additive is added.

9. The method according to any one of the preceding claims, **characterized in that** step c) and step d), and possibly also step b), are conducted in an extruder comprising at least one conveying element
and that
the extruder in step c) and possibly also in step d) is degassed, in particular vacuum degassed
and that
the component A2 in the region of a least one conveying element, in particular by means of a spray nozzle, in a particularly preferred manner by means of a capillary spray nozzle, is mixed in.

10. The method according to any one of the preceding claims, further comprising
a6) Providing at least one dispersing agent, selected from the group consisting of waxes, in particular PE waxes, ethylene vinyl acetate-copolymer waxes and/or montan waxes, metal soaps, in particular Mg, K and/or Zn stearates, organic fatty acids and organic fatty acid esters or their random mixtures,
wherein in step b) the components according to a1), a2), a3) and a6), or according to a1), a2), a4) and a6), or according to a1), a2), a3), a4) and a6), or according to a1), a2) a3), a5) and a6), or according to a1), a2), a4), a5) and a6), or according to a1), a2), a3), a4), a5) and a6) are mixed.

11. The method according to any one of the preceding claims, **characterized in that**
the components according to a1) and a3) or a1) and a4) or a1), a3) and a4) or a1), as) and a3) or a1), a5) and a4) or a1), a5), a3) and a4) are mixed, in particular by means of mixing in or extrusion, and that one mixes the mixture obtained, in particular in a fluid or paste form, with component a2), in particular by means of mixing in or extrusion, in particular that one adds component a2) to the mixture obtained, and/or that one mixes the component according to a3) or a4),
or a3) and a4) with the first portion of the component according to a1) and that the mixture obtained is mixed, in particular in a fluid or paste form, with the remaining portion of the component according to a1), in particular by means of mixing in or extrusion.

12. A masterbatch obtained or obtainable according to a method according to any one of the preceding claims, in particular present in granular form.

13. The masterbatch according to claim 12, containing
at least one dyeing agent (component A3), in particular at least one pigment, and/or containing at least one functional additive (component A4).

14. The masterbatch according to claim 12 or 13, containing at least one block copolymer with the general formula IV
B-[R₂-(O-Si(R₁)₂)ₙ-O-Si(R₁)₂-R₂-NH-CO-NH-R₃-NH-CO-NH]ₐ-B' (IV)
with
R1 Independently of each other, a monovalent hydrocarbon residue, possibly substituted with fluorine or chlorine, with 1 to 20 carbon atoms,
R2 Independently of each other, an alkyl residue with 1 to 20 carbon atoms, in which methyl units which are not adjacent to each other can be replaced by groups -O-, or an aryl residue with 6 to 22 carbon atoms,
R3 An alkyl residue that is possibly substituted with fluorine or chlorine with 1 to 20 carbon atoms, in which methyl units which are not adjacent to each other
B, B' can be replaced by groups -O-, or an aryl residue with 6 to 22 carbon atoms. Independently of each other, an end group which is covalently bound to the polymer,
n A number from 75 to 215, in particular 80 to 200, and in a particularly preferred manner, from 100 to 180 or 110 to 160, and
a A number of at least 1, in particular in the region of or between 1 to 140, in particular in the region of 5 to 100,
and/or
at least one block copolymer with the general formula V
B-[R²-(O-Si(R¹)₂)ₙ-O-Si(R¹)₂-R²-NH-CO-NH-R³-NH-CO-V-R⁴-W-CO-NH-R³-NH-CO-NH]ₐ-B' (V)
with
R1 Independently of each other, a monovalent hydrocarbon residue, possibly substituted with fluorine or chlorine, with 1 to 20 carbon atoms,
R2 Independently of each other, an alkyl residue with 1 to 20 carbon atoms, in which methyl units which are not adjacent to each other can be replaced by groups -O-, or an aryl residue with 6 to 22 carbon atoms,
R3 An alkyl residue that is possibly substituted with fluorine or chlorine with 1 to 20 carbon atoms, in which methyl units which are not adjacent to each other can be replaced by groups -O-, or an aryl residue with 6 to 22 carbon atoms,
R4 An alkyl residue which is possibly substituted with fluorine, chlorine, C1-C6-alkyl- or C1-C6-alkyl ester, with 1 to 700 C atoms, in which methyl units which are not adjacent to each other can be replaced by groups -O-, -COO-, -OCO- or -OCOO-, and
V, W Independently of each other -O- or -NR5, wherein R5 is hydrogen, an alkyl residue with 1 to 10 C atoms or an aryl residue with 6 to 22 C atoms,
B, B' Independently of each other, an end group which is covalently bound to the polymer,
n A number from 75 to 215, in particular 80 to 200, and in a particularly preferred manner, from 100 to 180 or 110 to 160,
a A number of at least 1, in particular in the region of or between 1 to 140, in particular in the region of 5 to 100.

15. The masterbatch according to claim 14, **characterized in that**
with the block copolymers according to the formula (IV) and/or (V), "n" lies in the region of 80 to 200 and "a" lies in the region of 5 to 100, or in the region of 10 to 50, or "n" lies in the region of 100 to 180 and "a" lies in the region of 5 to 100, or in the region of 10 to 50, or "n" lies in the region of 110 to 160 and "a" lies in the region of 5 to 100 or in the region of 10 to 50.

16. A polymer material obtained or obtainable by mixing at least one polymer and at least one masterbatch according to any one of claims 12 to 15.

17. The polymer material according to claim 16, **characterized in that**
the polymer is selected from the group consisting of thermoplastics, thermoplastic elastomers, elastomers and duromers or mixtures of these.

18. A moulded body, obtained or obtainable by means of
injection moulding, extruding, compression moulding, roll rotation, rotation moulding, laser sintering, Fused Deposition Modelling (FDM), granulation and/or casting of the polymer material according to claim 16 or 17.

19. The use of the masterbatch according to any one of claims 12 to 15 for colouring polymer materials and/or for equipping polymer materials with functional additives.

## Revendications

1. Procédé pour la fabrication d'un mélange maître, comprenant les étapes suivantes :
a1) Mise à disposition d'au moins un composé siloxane avec au moins une, en particulier deux ou plus, terminaisons de groupes amino, hydroxyle, carboxyle, carboxylate, ester d'acide carboxylique ou anhydride carboxylique, de formule générale (composant A1) :
avec
R1 indépendamment les uns des autres, un radical hydrocarboné monovalent, substitué le cas échéant par du fluor ou du chlore, avec de 1 à 20 atomes de carbone, en particulier du méthyl,
R2 indépendamment les uns des autres, un radical alkyle avec de 1 à 20 atomes de carbone, dans lequel des unités de méthylène non voisines peuvent être remplacées par des groupes -O-, ou un radical aryle avec de 6 à 22 atomes de carbone, en particulier un radical propyle,
X, Y indépendamment les uns des autres, un groupe hydroxyle, carboxyle, carboxylate, ester carboxylique, anhydride carboxylique ou amino NHR' avec R' = hydrogène, un radical alkyle avec de 1 à 10 atomes de carbone ou un radical aryle avec de 6 à 22 atomes de carbone, en particulier un groupe NH₂-, et
n un nombre de 75 à 215, en particulier de 80 à 200 ;
a2) Mise à disposition d'au moins un composé au moins bifonctionnel, en particulier bifonctionnel (composant A2), lequel présente deux ou plus, en particulier deux, groupes pouvant être liés à X et Y, en particulier par polyaddition ou polycondensation ;
a3) Mise à disposition d'au moins une matière colorante (composant A3) et/ou
a4) Mise à disposition d'au moins un additif fonctionnel (composant A4) ;
a5) La mise à disposition d'au moins un composé siloxane avec au moins une, en particulier deux ou plus, terminaisons de groupes amino, hydroxyle, carboxyle, carboxylate, ester d'acide carboxylique ou anhydride carboxylique de formule générale (composant A5) : 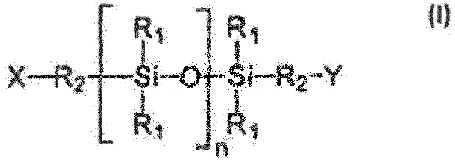 avec
R1 indépendamment les uns des autres, un radical hydrocarboné monovalent, substitué le cas échéant par du fluor ou du chlore, avec de 1 à 20 atomes de carbone, en particulier du méthyl,
R2 indépendamment les uns des autres, un radical alkyle avec de 1 à 20 atomes de carbone, dans lequel des unités de méthylène non voisines peuvent être remplacées par des groupes -O-, ou un radical aryle avec de 6 à 22 atomes de carbone, en particulier un radical propyle,
X, Y indépendamment les uns des autres, un groupe hydroxle, carboxyle, carboxylate, ester carboxylique, anhydride carboxylique ou amino NHR' avec R' = hydrogène, un radical alkyle avec de 1 à 10 atomes de carbone ou un radical aryle avec de 6 à 22 atomes de carbone, en particulier un groupe NH₂-, et
n un nombre de 20 à 74, en particulier de 25 à 70 ;
b) Mélange des composants selon a1), a2), a3) et a5) ou selon a1), a2), a4) et a5) ou selon a1), a2), a3), a4) et a5) ;
c) Formation de polymère à partir du mélange selon b) et
d) Fusion et/ou maintien à l'état liquide de la fusion du polymérisat formé à l'étape c), en particulier dans l'extrudeuse ou dans le mélangeur interne en discontinu, et
e) Transformation du polymérisat selon l'étape d) en un état solide, en particulier sous forme de granulés ou de poudre.

2. Procédé selon la revendication 1, **caractérisé en ce que**
pour le composé mis à disposition à l'étape a1), n représente un nombre dans la plage de 100 à 180, en particulier dans la plage de 110 à 160, et/ou **en ce que**, pour le composé mis à disposition à l'étape a5), n représente un nombre dans la plage de 30 à 60, en particulier dans la plage de 35 à 50, et/ou **en ce que** le composé mis à disposition à l'étape a1) et/ou a5) est à l'état liquide à température ambiante (20 °C).

3. Procédé selon l'une des revendications précédentes, **caractérisé en ce que** le composé mis à disposition à l'étape a1) représente un composé siloxane A1, en particulier un polydiméthylsiloxane avec terminaison α,ω-aminopropyle, avec une masse molaire moyenne dans la plage de 6 000 à 14 000 g/mol, de préférence dans la plage de 9 000 à 13 000 g/mol, et/ou **en ce que** le composé siloxane mis à disposition à l'étape a5) représente en particulier un polydiméthylsiloxane avec terminaison α,ω-aminopropyle, avec une masse molaire moyenne dans la plage de 2 000 à 5 500 g/mol, en particulier dans la plage de 2 500 à 4 000 g/mol

4. Procédé selon l'une des revendications précédentes, **caractérisé en ce que** le monomère bifonctionnel (composant A2) selon a2) représente un diisocyanate de formule générale
O=C=N-R₃-N=C=O (II)
(II) :
avec
R3 un radical alkyle, substitué le cas échéant par du fluor ou du chlore, avec de 1 à 20 atomes de carbone, dans lequel des unités de méthylène non voisines peuvent être remplacées par des groupes -O-, ou un radical aryle avec de 6 à 22 atomes de carbone.

5. Procédé selon l'une des revendications précédentes, **caractérisé en ce que**, après le mélange des composants selon l'étape b), en particulier immédiatement après la fin de l'ajout des composants, au moins un extenseur de chaîne (composant B) de formule générale III :
H-V-R₄-W-H (III)
avec
R4 un radical alkyle, substitué le cas échéant par du fluor, du chlore, un radical alkyle C1-C6 ou un ester d'alkyle C1-C6 avec de 1 à 700 atomes de carbone, dans lequel des unités de méthylène non voisines peuvent être remplacées par des groupes -O-, -COO-, -OCO- ou -OCOO-, et
V, W indépendamment les uns des autres, -O- ou -NR", R" étant de l'hydrogène, un radical alkyle avec de 1 à 10 atomes de carbone ou un radical aryle avec de 6 à 22 atomes de carbone,
est ajouté.

6. Procédé selon l'une des revendications précédentes, **caractérisé en ce que** l'au moins une matière colorante représente ou comprend un pigment et/ou un colorant, en particulier un pigment, et/ou **en ce que** l'additif fonctionnel comprend un agent de nucléation, des nanocharges, des phyllosilicates, en particulier des phyllosilicates délaminés, des stabilisateurs, en particulier des stabilisateurs thermiques et/ou des stabilisants à la lumière, des agents antistatiques, des agents ignifuges, des agents adhésifs, des agents antiblocage, des auxiliaires de traitement, des gonflants, des agents antimicrobiens, en particulier des agents antibactériens, et des mélanges de ceux-ci.

7. Procédé selon l'une des revendications précédentes, **caractérisé en ce que** les composés de formule générale (I) (composant A1) et le composé bifonctionnel (composant A2) sont utilisés dans des proportions équimolaires.

8. Procédé selon l'une des revendications précédentes, **caractérisé en ce que** l'on ajoute à l'étape b) de 1 à 90 % massique, de préférence de 5 à 85 % massique et en particulier de préférence de 10 à 80 % massique, par rapport au poids du polymère obtenu à l'étape e), de matière colorante, en particulier de pigment, et/ou de 1 à 80 % massique, de préférence de 2 à 70 % massique, et en particulier de préférence de 5 à 50 % massique, par rapport au poids du polymère obtenu à l'étape e), d'additif fonctionnel.

9. Procédé selon l'une des revendications précédentes, **caractérisé en ce que** l'étape c) et l'étape d), ainsi que le cas échéant aussi l'étape b) sont effectuées dans une extrudeuse comprenant au moins un élément de transport,
et **en ce que**
l'extrudeuse est dégazée, en particulier dégazée sous vide, à l'étape c) et le cas échéant aussi à l'étape d),
et **en ce que**
le composant A2 est mélangé dans la zone d'au moins un élément de transport, en particulier au moyen d'une tête de pulvérisation, en particulier de préférence d'une tête de pulvérisation capillaire.

10. Procédé selon l'une des revendications précédentes, comprenant en outre
a6) Mise à disposition d'au moins un agent dispersant choisi dans le groupe se composant de cires, en particulier cires PE, cires de copolymère éthylène-acétate de vinyle et/ou de cires de lignite, savons métalliques, en particulier des stéarates de Mg, de K et/ou de Zn, des acides gras organiques et des esters d'acides gras organiques ou leurs mélanges quelconques,
les composés selon a1), a2), a3) et a6) ou selon a1), a2), a4) et a6) ou selon a1), a2), a3), a4) et a6) ou selon a1), a2) a3), a5) et a6) ou selon a1), a2), a4), a5) et a6) ou selon a1), a2), a3), a4), a5) et a6) étant mélangés à l'étape b).

11. Procédé selon l'une des revendications précédentes, **caractérisé en ce qu'**on mélange le composant selon a1) et a3) ou a1) et a4) ou a1), a3) et a4) ou a1), a5) et a3) ou a1), a5) et a4) ou a1), a5), a3) et a4), en particulier par incorporation ou extrusion, et **en ce qu'**on mélange le mélange obtenu, en particulier sous forme liquide ou pâteuse, avec le composant a2), en particulier par incorporation ou extrusion, en particulier **en ce qu'**on ajoute le composant a2) au mélange obtenu, et/ou **en ce qu'**on mélange le composant selon a3) ou a4) ou a3) et a4) avec une première part du composant selon a1), et **en ce qu'**on mélange le mélange obtenu, en particulier sous forme liquide ou pâteuse, avec la part restante du composant selon a1), en particulier par incorporation ou extrusion.

12. Mélange maître, obtenu ou pouvant être obtenu conformément à un procédé selon l'une des revendications précédentes, existant en particulier sous forme de granulés.

13. Mélange maître selon la revendication 12, comprenant
au moins une matière colorante (composant A3), en particulier au moins un pigment, et/ou comprenant au moins un additif fonctionnel (composant A4).

14. Mélange maître selon la revendication 12 ou 13, comprenant au moins un copolymère à blocs de formule générale IV
B-[R₂-(O-Si(R₁)₂)ₙ-O-Si(R₁)₂-R₂-NH-CO-NH-R₃-NH-CO-NH]ₐ-B' (IV)
B-[R₂-(O-Si(R₁)₂)ₙ-O-Si(R₁)₂-R₂-NH-CO-NH-R₃-NH-CO-NH]ₐ-B' (IV)
avec
R1 indépendamment les uns des autres, un radical hydrocarboné monovalent, substitué le cas échéant par du fluor ou du chlore, avec de 1 à 20 atomes de carbone,
R2 indépendamment les uns des autres, un radical alkyle avec de 1 à 20 atomes de carbone, dans lequel des unités de méthylène non voisines peuvent être remplacées par des groupes -O-, ou un radical aryle avec de 6 à 22 atomes de carbone,
R3 un radical alkyle, substitué le cas échéant par du fluor ou du chlore, avec de 1 à 20 atomes de carbone, dans lequel des unités de méthylène non voisines peuvent être remplacées par des groupes -O-, ou un radical aryle avec de 6 à 22 atomes de carbone,
B, B' indépendamment les uns des autres, une terminaison qui est liée de façon covalente au polymère,
n un nombre de 75 à 215, en particulier de 80 à 200, et en particulier de préférence de 100 à 180 ou de 110 à 160, et
a un nombre d'au moins 1, en particulier dans la plage de, ou entre, 1 à 140, en particulier dans la plage de 5 à 100,
et/ou
au moins un copolymère à blocs de formule générale V, étant
avec
R1 indépendamment les uns des autres, un radical hydrocarboné monovalent, substitué le cas échéant par du fluor ou du chlore, avec de 1 à 20 atomes de carbone,
R2 indépendamment les uns des autres, un radical alkyle avec de 1 à 20 atomes de carbone, dans lequel des unités de méthylène non voisines peuvent être remplacées par des groupes -O-, ou un radical aryle avec de 6 à 22 atomes de carbone,
R3 un radical alkyle, substitué le cas échéant par du fluor ou du chlore, avec de 1 à 20 atomes de carbone, dans lequel des unités de méthylène non voisines peuvent être remplacées par des groupes -O-, ou un radical aryle avec de 6 à 22 atomes de carbone,
R4 un radical alkyle, substitué le cas échéant par du fluor, du chlore, un radical alkyle C1-C6 ou un ester d'alkyle C1-C6 avec de 1 à 700 atomes de carbone, dans lequel des unités de méthylène non voisines peuvent être remplacées par des groupes -O-, - COO-, -OCO ou -OCOO-,
V, W indépendamment les uns des autres, -O- ou -NR5, R5 étant de l'hydrogène, un radical alkyle avec de 1 à 10 atomes de carbone ou un radical aryle avec de 6 à 22 atomes de carbone,
B, B' indépendamment les uns des autres, une terminaison qui est liée de façon covalente au polymère,
n un nombre de 75 à 215, en particulier de 80 à 200, et en particulier de préférence de 100 à 180 ou de 110 à 160,
a un nombre d'au moins 1, en particulier dans la plage de, ou entre, 1 à 140, en particulier dans la plage de 5 à 100.

15. Mélange maître selon la revendication 14, **caractérisé en ce que**
sur les copolymères à blocs selon la formule (IV) et/ou (V), « n » se trouve dans la plage de 80 à 200 et « a » dans la plage de 5 à 100 ou dans la plage de de 10 à 50, ou **en ce que** « n » se trouve dans la plage de 100 à 180 et « a » dans la plage de 5 à 100 ou dans la plage de 10 à 50, ou **en ce que** « n » se trouve dans la plage de 110 à 160 et « a » dans la plage de 5 à 100 ou dans la plage de 10 à 50.

16. Matériau polymère obtenu ou pouvant être obtenu par le mélange d'au moins un polymère et d'au moins un mélange maître selon l'une des revendications 12 à 15.

17. Matériau polymère selon la revendication 16, **caractérisé en ce que** le polymère est choisi dans le groupe se composant de thermoplastiques, élastomères thermoplastiques, élastomères ou plastiques thermodurcissables, ou de mélanges de ceux-ci.

18. Corps moulé, obtenu ou pouvant être obtenu par
moulage par injection, extrusion, moulage par compression, rotation de rouleaux, moulage par rotation, frittage laser, prototypage rapide par dépôt de fil (FDM), granulation et/ou moulage du matériau polymère selon la revendication 16 ou 17.

19. Utilisation du mélange maître selon l'une des revendications 12 à 15, pour colorer des matériaux polymères et/ou pour doter des matériaux polymères d'additifs fonctionnels.
